(19) Europäisches Patentamt
European Patent Office
Office européen des brevets

(11) EP 4 703 407 A1

(12) **EUROPEAN PATENT APPLICATION**
published in accordance with Art. 153(4) EPC

(43) Date of publication:
**04.03.2026 Bulletin 2026/10**

(21) Application number: **24797120.3**

(22) Date of filing: **25.04.2024**

(51) International Patent Classification (IPC):
***C08G 81/00*** *(2006.01)* ***C08L 77/00*** *(2006.01)*

(52) Cooperative Patent Classification (CPC):
**C08G 81/00; C08L 77/00**

(86) International application number:
**PCT/JP2024/016236**

(87) International publication number:
**WO 2024/225375 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.04.2023 JP 2023073616**

(71) Applicant: **Kuraray Co., Ltd.**
**Kurashiki-shi, Okayama 710-0801 (JP)**

(72) Inventor: **MINAMIGUCHI, Daiki**
**Tsukuba-shi, Ibaraki 305-0841 (JP)**

(74) Representative: **Müller-Boré & Partner Patentanwälte PartG mbB**
**Friedenheimer Brücke 21**
**80639 München (DE)**

(54) **POLYAMIDE BLOCK COPOLYMER, POLYAMIDE BLOCK COPOLYMER COMPOSITION, AND MOLDED BODY**

(57) A polyamide block copolymer which comprises a polymer block (A) containing a constitutional unit derived from a semi-aromatic polyamide in an amount of 50 mol% or more and a polymer block (B) having a glass transition temperature of 20°C or lower, and has a terminal blocking ratio of 10% or more.

EP 4 703 407 A1

## Description

### Technical Field

The present invention relates to a polyamide block copolymer in which molecular terminals are blocked, a polyamide block copolymer composition, and a molded article.

### Background Art

Thermoplastic elastomers can be melt-molded and are used in a wide range of fields such as automobile interior and exterior material parts, electronic device material parts, and sporting goods.

The thermoplastic elastomer contains a soft segment exhibiting flexibility and a hard segment exhibiting a cross-linking point, and is classified into, for example, an olefin-based elastomer, an amide-based elastomer, a urethane-based elastomer, an ester-based elastomer, an acrylic-based elastomer, and a styrene-based elastomer. The thermoplastic elastomer can exhibit physical properties such as good mechanical strength, abrasion resistance, heat resistance, and oil resistance according to the above-described classification, and further improvement has been studied. For example, PTL 1 discloses an amide-based thermoplastic elastomer. Specifically, PTL 1 discloses a polyamide block copolymer obtained by polymerizing a dicarboxylic acid, a diamine, and a polyetherdiamine and/or a polyetherdicarboxylic acid for the purpose of being capable of exhibiting heat resistance and low-temperature characteristics equal to or higher than those of a conventional thermoplastic elastomer.

On the other hand, PTL 2 discloses a polyamide consisting of a dicarboxylic acid component and a diamine component, which has a specific limiting viscosity and in which 10% or more of the terminal groups are blocked, and which is excellent in hot water resistance, surface beauty, heat resistance, mechanical properties, low water absorption, chemical resistance and the like by having a specific limiting viscosity and a specific terminal blocking ratio.

A technique for improving various physical properties of a polyamide block copolymer by blocking a terminal group thereof is also known. For example, PTL 3 discloses a polyamide resin formed from a mixture containing an acid component containing an aromatic dicarboxylic acid and an amine component, which is improved in dispersibility with a lower solution viscosity than in the prior art. In Example 21 of PTL 3, a polyamide resin blocked with propionic acid is produced. In addition, PTL 4 discloses a terminal-modified polyetheramide resin which consists of a specific constitutional unit and has a hydrocarbon group having 1 to 22 carbon atoms at a terminal, and discloses that the terminal-modified polyetheramide resin reduces easily extractable low molecular weight compounds, generates few low molecular weight compounds after molding (after thermal history), and has good thermal stability.

### Citation List

### Patent Literature

PTL 1:JP 2000-154248 A

PTL 2:JP 07-228690 A

PTL 3:JP 62-164728 A

PTL 4:JP 03-237131 A

### Summary of Invention

### Technical Problem

In PTL 1, it is disclosed that a terminal blocking agent may be used in the production of a polyamide block copolymer, but a specific effect thereof is not shown. On the other hand, PTLs 2 to 4 disclose techniques for improving various physical properties by blocking the terminal groups of a polyamide-based resin. For example, in the polyetheramide resin disclosed in PTL 4, a technique showing good thermal stability is disclosed. However, even with the technique of PTL 4, satisfactory thermal stability may not be obtained depending on the application, and a polyamide block copolymer having more excellent thermal stability is desired from the viewpoint of molding processing.

Therefore, an object of the present invention is to provide a polyamide block copolymer having improved thermal

stability, a polyamide block copolymer composition, and a molded article.

In addition, other objects of the present invention can be understood by a person skilled in the art who has come into contact with the present description.

Solution to Problem

As a result of intensive studies to solve the above problems, the present inventors have conceived of the present invention described below and found that the problems can be solved.

That is, the present invention is as follows.

[1] A polyamide block copolymer which contains a polymer block (A) containing a constitutional unit derived from a semi-aromatic polyamide in an amount of 50 mol% or more and a polymer block (B) having a glass transition temperature of 20°C or lower, and has a terminal blocking ratio of 10% or more.
[2] The polyamide block copolymer according to [1], in which the polymer block (B) has a number-average molecular weight of 100 or more.
[3] The polyamide block copolymer according to [1] or [2], in which the polymer block (B) contains an oxygen atom in a main chain.
[4] The polyamide block copolymer according to any one of [1] to [3], in which the polymer block (B) contains a constitutional unit derived from polyetherpolyol or an amine derivative thereof or a carboxy derivative thereof in an amount of 50 mol% or more.
[5] The polyamide block copolymer according to any one of [1] to [4], in which the polyamide block copolymer has a tensile elongation at break of 30% or more as measured in accordance with JIS K 7161-1:2014.
[6] The polyamide block copolymer according to any one of [1] to [5], in which the semi-aromatic polyamide contains a constitutional unit derived from an aliphatic diamine having 4 or more carbon atoms and a constitutional unit derived from an aromatic dicarboxylic acid.
[7] The polyamide block copolymer according to any one of [1] to [6], in which a molecular terminal is blocked with at least one selected from the group consisting of an aryl group, an aromatic alkyl group, an alkyl group having 1 to 3 carbon atoms, an alkyl group having 9 or more carbon atoms, an alicyclic alkyl group having 4 or more carbon atoms, and a hydrogen atom.
[8] The polyamide block copolymer according to [7], in which the aryl group is a phenyl group or a naphthyl group.
[9] The polyamide block copolymer according to [7], in which the aromatic alkyl group is a benzyl group.
[10] The polyamide block copolymer according to [7], in which the alkyl group having 1 to 3 carbon atoms is a methyl group or an ethyl group.
[11] The polyamide block copolymer according to [7], in which the alkyl group having 9 or more carbon atoms is a lauryl group or a stearyl group.
[12] The polyamide block copolymer according to [7], in which the alicyclic alkyl group is a cyclohexyl group.
[13] A polyamide block copolymer composition containing the polyamide block copolymer according to any one of [1] to [12].
[14] A molded article formed of the polyamide block copolymer according to any one of [1] to [12] or the polyamide block copolymer composition according to [13].
[15] A molded article formed of the polyamide block copolymer composition according to [13].

Advantageous Effects of Invention

According to the present invention, it is possible to provide a polyamide block copolymer having improved thermal stability, a polyamide block copolymer composition, and a molded article.

Description of Embodiments

Hereinafter, the description will be made based on an example of embodiments of the present invention. However, the embodiments shown below are examples for embodying the technical idea of the present invention, and the present invention is not limited to the following description.

In addition, in the description herein, preferred modes of the embodiments are shown, but a combination of two or more of individual preferred modes is also a preferred mode. Regarding the matters indicated by numerical ranges, in a case where there are several numerical ranges, it is possible to selectively combine a lower limit value and an upper limit value thereof to obtain a preferred mode.

In the description herein, when there is a description pertaining to a numerical range of "XX to YY", the description means "XX or more and YY or less".

In addition, in the description herein, "ZZ unit" (here, "ZZ" indicates a monomer) means "constitutional unit derived from ZZ", for example, "dicarboxylic acid unit" means "constitutional unit derived from dicarboxylic acid", and "diamine unit" means "constitutional unit derived from diamine".

<<Polyamide Block Copolymer>>

The polyamide block copolymer of the present embodiment is characterized by containing a polymer block (A) containing a constitutional unit derived from a semi-aromatic polyamide in an amount of 50 mol% or more and a polymer block (B) having a glass transition temperature of 20°C or lower, and having a terminal blocking ratio of 10% or more.

The polyamide block copolymer of the present embodiment has a terminal blocking ratio of 10% or more, whereby the thermal stability can be improved as compared with the conventional polyamide block copolymer. It is considered that one of the factors for exhibiting further improved thermal stability is that the promotion of thermal deterioration due to the motion of the molecular terminal is suppressed by blocking the molecular terminal at a specific ratio.

In the polyamide block copolymer, the polymer block (A) is a hard segment, and the polymer block (B) is a soft segment. The polyamide block copolymer of the present embodiment can contribute to the expression of excellent heat resistance and flexibility since each physical property of the polymer block (A) and the polymer block (B) is sufficiently exhibited.

Therefore, the polyamide block copolymer of the present embodiment can have improved thermal stability and excellent heat resistance and flexibility.

<Polymer Block (A)>

The polymer block (A) contains a constitutional unit derived from a semi-aromatic polyamide in an amount of 50 mol% or more.

The semi-aromatic polyamide refers to a polyamide containing a diamine unit having a constitutional unit derived from an aliphatic diamine as a main component and a dicarboxylic acid unit having a constitutional unit derived from an aromatic dicarboxylic acid as a main component, or a polyamide resin containing a dicarboxylic acid unit having a constitutional unit derived from an aliphatic dicarboxylic acid as a main component and a diamine unit having a constitutional unit derived from an aromatic diamine as a main component. Here, the expression "as a main component" means that the diamine unit or the dicarboxylic acid unit constitutes 50 to 100 mol%, preferably 60 to 100 mol% of all units in the diamine unit or dicarboxylic acid unit.

In the present embodiment, from the viewpoint of more easily obtaining excellent heat resistance, it is preferable that the semi-aromatic polyamide contains a diamine unit having a constitutional unit derived from an aliphatic diamine as a main component and a dicarboxylic acid unit having a constitutional unit derived from an aromatic dicarboxylic acid as a main component.

[Aliphatic Diamine Unit]

From the viewpoint of advantageously improving physical properties such as heat resistance and flexibility, the aliphatic diamine used as the diamine unit preferably has 4 or more carbon atoms. That is, the semi-aromatic polyamide preferably contains a constitutional unit derived from an aliphatic diamine having 4 or more carbon atoms and a constitutional unit derived from an aromatic dicarboxylic acid.

As the aliphatic diamine used for the diamine unit, an aliphatic diamine having 4 to 18 carbon atoms is preferable, an aliphatic diamine having 4 to 16 carbon atoms is more preferable, an aliphatic diamine having 4 to 12 carbon atoms is still more preferable, an aliphatic diamine having 6 to 12 carbon atoms is yet still more preferable, an aliphatic diamine having 6 to 10 carbon atoms is even yet still more preferable, and an aliphatic diamine having 7 to 10 carbon atoms is even yet still more preferable.

In addition, the content of the constitutional unit derived from the aliphatic diamine having 4 to 18 carbon atoms based on all diamine units is preferably 30 mol% or more, more preferably 30 to 100 mol%, still more preferably 50 to 100 mol%, yet still more preferably 70 to 100 mol%, even yet still more preferably 90 to 100 mol%, and may be 100 mol%, from the viewpoint that the polymerization reaction with the dicarboxylic acid favorably proceeds and it is advantageous for improving physical properties such as heat resistance and flexibility.

Examples of the aliphatic diamine having 4 to 18 carbon atoms include linear aliphatic diamines such as 1,4-butanediamine, 1,5-pentanediamine, 1,6-hexanediamine (hexamethylenediamine), 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, and 1,18-octadecanediamine;

branched aliphatic diamines such as 1-butyl-1,2-ethanediamine, 1,1-dimethyl-1,4-butanediamine, 1-ethyl-1,4-butanediamine, 2-ethyl-1,4-butanediamine, 1,2-dimethyl-1,4-butanediamine, 1,3-dimethyl-1,4-butanediamine, 1,4-dimethyl-1,4-butanediamine, 2-methyl-1,3-propanediamine, 2-methyl-1,4-butanediamine, 2,3-dimethyl-1,4-butanediamine, 2-methyl-1,5-pentanediamine, 3-methyl-1,5-pentanediamine, 2-ethyl-1,5-pentanediamine, 2-propyl-1,5-pentanediamine, 2-butyl-2-ethyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2-ethyl-1,6-hexanediamine, 2-propyl-1,6-hexanediamine, 2,4-diethyl-1,6-hexanediamine, 2-ethyl-1,7-heptanediamine, 2-propyl-1,7-heptanediamine, 2-methyl-1,8-octanediamine, 3-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 2-ethyl-1,8-octanediamine, 2-methyl-1,9-nonanediamine, and 5-methyl-1,9-nonanediamine; and

alicyclic diamines such as 1,2-cyclohexanediamine, 1,4-cyclohexanediamine, 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl) methane, bis(3-methyl-4-aminocyclohexyl)methane, 2,2-bis(4-aminocyclohexyl)propane, and bis(aminopropyl)piperazine. These may be used alone or in combination of two or more kinds thereof.

From the viewpoint of heat resistance, as the above-described aliphatic diamine, it is preferable to use at least one selected from the group consisting of a linear aliphatic diamine and a branched aliphatic diamine, and it is more preferable to use a linear aliphatic diamine and a branched aliphatic diamine in combination.

In a case where the linear aliphatic diamine and the branched aliphatic diamine are used in combination, the molar ratio of the linear aliphatic diamine to the branched aliphatic diamine is preferably 99:1 to 1:99, more preferably 95:5 to 5:95, still more preferably 90:10 to 10:90, yet still more preferably 85:15 to 15:85, even yet still more preferably 80:20 to 20:80, even yet still more preferably 70:30 to 30:70, and particularly preferably 65:35 to 35:65. When the molar ratio of the linear aliphatic diamine and the branched aliphatic diamine is within the above range, the polymerization reaction with the polymer block (B) favorably proceeds, and excellent heat resistance and flexibility can be expected in the obtained polyamide block copolymer.

From the viewpoint that the effects of the present invention are more remarkably exhibited and the availability of raw materials is also excellent, the semi-aromatic polyamide preferably contains a constitutional unit derived from at least one selected from the group consisting of 1,4-butanediamine, 1,6-hexanediamine, 1,9-nonanediamine, 2-propyl-1,6-hexanediamine, 2-ethyl-1,7-heptanediamine, 2-methyl-1,8-octanediamine, 1,10-decanediamine, 1,11-undecanediamine, and 1,12-dodecanediamine, and more preferably contains a constitutional unit derived from at least one selected from the group consisting of 1,6-hexanediamine, 1,9-nonanediamine, 2-methyl-1,8-octanediamine, and 1,10-decanediamine. Among these, it is still more preferable that the semi-aromatic polyamide contains a constitutional unit derived from both 1,9-nonanediamine and 2-methyl-1,8-octanediamine, and contains a constitutional unit derived from both 1,6-hexanediamine and 1,10-decanediamine, and it is yet still more preferable that the semi-aromatic polyamide contains a constitutional unit derived from both 1,9-nonanediamine and 2-methyl-1,8-octanediamine from the viewpoint of easily obtaining molding processability and even more excellent heat resistance.

The content of the 1,9-nonanediamine unit and/or the 2-methyl-1,8-octanediamine unit in the total amount of the diamine units constituting the semi-aromatic polyamide is preferably 50 to 100 mol%, more preferably 60 to 100 mol%, still more preferably 75 to 100 mol%, and yet still more preferably 90 to 100 mol%. When the content of the 1,9-nonanediamine unit and/or the 2-methyl-1,8-octanediamine unit in the total amount of the diamine units constituting the semi-aromatic polyamide is within the above range, the heat resistance is further improved, and excellent chemical resistance can also be expected.

In a case where 1,9-nonanediamine and 2-methyl-1,8-octanediamine are used in combination, the molar ratio of 1,9-nonanediamine to 2-methyl-1,8-octanediamine is preferably 99:1 to 1:99, more preferably 95:5 to 5:95, still more preferably 90:10 to 10:90, yet still more preferably 85:15 to 15:85, even yet still more preferably 80:20 to 20:80, even yet still more preferably 70:30 to 30:70, and particularly preferably 65:35 to 35:65. When the molar ratio of 1,9-nonanediamine and 2-methyl-1,8-octanediamine is within the above range, the polymerization reaction with the polymer block (B) favorably proceeds, and excellent heat resistance and flexibility can be expected in the obtained polyamide block copolymer.

The content of the 1,6-hexanediamine unit and/or the 1,10-decanediamine unit in the total amount of the diamine units constituting the semi-aromatic polyamide is preferably 50 to 100 mol%, more preferably 60 to 100 mol%, still more preferably 75 to 100 mol%, and yet still more preferably 90 to 100 mol%.

In a case where 1,6-hexanediamine and 1,10-decanediamine are used in combination, the molar ratio of 1,6-hexanediamine to 1,10-decanediamine is preferably 99:1 to 1:99, more preferably 95:5 to 5:95, still more preferably 90:10 to 10:90, and yet still more preferably 85:15 to 15:85.

In addition, the semi-aromatic polyamide may contain, as a diamine unit, a constitutional unit derived from a diamine other than an aliphatic diamine, such as an aromatic diamine, as long as the effects of the present invention are not

impaired. The constitutional unit derived from a diamine other than an aliphatic diamine may be contained singly or in combination of two or more kinds thereof.

The content of the constitutional unit derived from a diamine other than the above-described aliphatic diamine in the diamine unit is preferably 30 mol% or less, more preferably 20 mol% or less, still more preferably 10 mol% or less, and yet still more preferably 5 mol% or less.

[Aromatic Dicarboxylic Acid Unit]

Examples of the aromatic dicarboxylic acid unit include constitutional unit derived from isophthalic acid, terephthalic acid, 1,4-naphthalenedicarboxylic acid, 2,6-naphthalenedicarboxylic acid, 2,7-naphthalenedicarboxylic acid, diphenic acid, 4,4'-biphenyldicarboxylic acid, diphenylmethane-4,4'-dicarboxylic acid, and diphenylsulfone-4,4'-dicarboxylic acid.

The aromatic dicarboxylic acid unit preferably contains a constitutional unit derived from at least one selected from the group consisting of terephthalic acid, 1,4-naphthalenedicarboxylic acid, 2,6-naphthalenedicarboxylic acid, and 2,7-naphthalenedicarboxylic acid from the viewpoint that the polymerization reaction with the diamine favorably proceeds and it is advantageous for improving physical properties such as heat resistance, and more preferably contains a constitutional unit derived from at least one selected from the group consisting of terephthalic acid and 2,6-naphthalenedicarboxylic acid from the viewpoint that the heat resistance is further improved.

These aromatic dicarboxylic acid units may be used alone or in combination of two or more kinds thereof.

From the viewpoint of heat resistance and mechanical strength, the content of the constitutional unit derived from at least one selected from the group consisting of terephthalic acid and 2,6-naphthalenedicarboxylic acid based on all dicarboxylic acid units is preferably 30 mol% or more, more preferably 30 to 100 mol%, still more preferably 50 to 100 mol%, yet still more preferably 70 to 100 mol%, even yet still more preferably 90 to 100 mol%, and may be 100 mol%.

In addition, the semi-aromatic polyamide may contain, as a dicarboxylic acid unit, a constitutional unit derived from a dicarboxylic acid other than an aromatic dicarboxylic acid, such as an aliphatic dicarboxylic acid, as long as the effects of the present invention are not impaired. The constitutional unit derived from a dicarboxylic acid other than an aromatic dicarboxylic acid may be contained singly or in combination of two or more kinds thereof.

Examples of the aliphatic dicarboxylic acid include linear aliphatic dicarboxylic acids such as oxalic acid, malonic acid, succinic acid, glutaric acid, adipic acid, pimelic acid, suberic acid, azelaic acid, sebacic acid, undecanedicarboxylic acid, and dodecanedicarboxylic acid;

branched aliphatic dicarboxylic acids such as 2,2-diethylsuccinic acid, 2,2-dimethylglutaric acid, 2-methyladipic acid, and trimethyladipic acid; and
alicyclic dicarboxylic acids such as 1,3-cyclopentanedicarboxylic acid and 1,4-cyclohexanedicarboxylic acid.

The content of the constitutional unit derived from a dicarboxylic acid other than the above-described aromatic dicarboxylic acid in the dicarboxylic acid unit is preferably 30 mol% or less, more preferably 20 mol% or less, still more preferably 10 mol% or less, and yet still more preferably 5 mol% or less.

(Content of Aliphatic Diamine Unit and Aromatic Dicarboxylic Acid)

The content of the constitutional unit derived from the aliphatic diamine with respect to the total constitutional unit constituting the semi-aromatic polyamide is preferably 15 to 55 mol%, and more preferably 25 to 55 mol%.

The content of the constitutional unit derived from the aromatic dicarboxylic acid with respect to the total constitutional unit constituting the semi-aromatic polyamide is preferably 15 to 55 mol%, and more preferably 25 to 55 mol%.

The total content of the constitutional unit derived from the aliphatic diamine and the aromatic dicarboxylic acid with respect to the total constitutional unit constituting the semi-aromatic polyamide is preferably 30 to 100 mol%, more preferably 50 to 100 mol%, and still more preferably 70 to 100 mol%, and may be 90 to 100 mol% or may be 100 mol%.

[Other Constitutional Unit]

In addition, the semi-aromatic polyamide may contain a constitutional unit other than the diamine unit and the dicarboxylic acid unit as long as the effects of the present invention are not impaired. Examples of the other constitutional unit include a polyvalent carboxylic acid unit, an aminocarboxylic acid unit, and a lactam unit.

Examples of the polyvalent carboxylic acid unit include a constitutional unit derived from a polyvalent carboxylic acid having three or more valences, such as trimellitic acid, trimesic acid, and pyromellitic acid. These polyvalent carboxylic acid units can be contained within a range in which melt molding is possible.

Examples of the aminocarboxylic acid unit include a constitutional unit derived from lactam such as caprolactam and lauryl lactam; an aminocarboxylic acid such as 11-aminoundecanoic acid and 12-aminododecanoic acid.

Examples of the lactam unit include a constitutional unit derived from ε-caprolactam, enantholactam, undecane lactam, lauryl lactam, α-pyrrolidone, and α-piperidone.

The content of the other constitutional unit with respect to the total constitutional unit constituting the semi-aromatic polyamide is preferably 30 mol% or less, and more preferably 10 mol% or less.

[Specific Examples of Semi-Aromatic Polyamide]

Representative semi-aromatic polyamides containing a diamine unit having an aliphatic diamine unit as a main component and a dicarboxylic acid unit having an aromatic dicarboxylic acid unit as a main component include polytetramethylene terephthalamide (polyamide 4T), polypentamethylene terephthalamide (polyamide 5T), polyhexamethylene terephthalamide (polyamide 6T), polyhexamethylene terephthalamide/polypentamethylene terephthalamide copolymer (polyamide 6T/5T), polyhexamethylene terephthalamide/poly(2-methylpentamethylene) terephthalamide copolymer (polyamide 6T/M5T), polynonamethylene terephthalamide (polyamide 9T), poly(2-methyloctamethylene) terephthalamide (polyamide M8T), polynonamethylene terephthalamide/poly(2-methyloctamethylene) terephthalamide copolymer (polyamide 9T/M8T), polynonamethylene naphthalene dicarboxamide (polyamide 9N), poly(2-methyloctamethylene) naphthalene dicarboxamide (polyamide M8N), polynonamethylene naphthalene dicarboxamide/poly(2-methyloctamethylene) naphthalene dicarboxamide copolymer (polyamide 9N/M8N), polydecamethylene terephthalamide (polyamide 10T), polydecamethylene terephthalamide/polypentamethylene terephthalamide copolymer (polyamide 10T/5T), polydecamethylene terephthalamide/poly(2-methylpentamethylene) terephthalamide copolymer (polyamide 10T/M5T), polydecamethylene terephthalamide/poly(2-methyloctamethylene) terephthalamide copolymer (polyamide 10T/M8T), polyhexamethylene isophthalamide (polyamide 6I), a copolymer of polyamide 6I and polyamide 6T (polyamide 6I/6T), a copolymer of polyhexamethylene adipamide (polyamide 66) and polyamide 6T (polyamide 66/polyamide 6T), a copolymer of polyamide 66, polyamide 6I, and polyamide 6T (polyamide 66/polyamide 6I/6T), a copolymer of polyamide 6T and polycaprolactam (polyamide 6) (polyamide 6T/6), a copolymer of polyamide 6T and polyundecaneamide (polyamide 11) (polyamide 6T/11), a copolymer of polyamide 6T and polydodecaneamide (polyamide 12) (polyamide 6T/12), polydecamethylene isophthalamide (polyamide 10I), a copolymer of polyamide 10I and polyamide 10T (polyamide 10I/10T), a copolymer of polyamide 6T and polyamide 10T (polyamide 6T/10T), a copolymer of polyamide 10T and polyamide 6 (polyamide 10T/6), a copolymer of polyamide 10T and polyamide 11 (polyamide 10T/11), and a copolymer of polyamide 10T and polyamide 12 (polyamide 10T/12).

[Method for Producing Semi-Aromatic Polyamide]

The semi-aromatic polyamide can be produced, for example, by a method such as a melt polymerization method, a solid phase polymerization method, or a melt extrusion polymerization method using a dicarboxylic acid and a diamine as raw materials. Specifically, the semi-aromatic polyamide can be produced as follows.

First, a diamine, a dicarboxylic acid, a terminal blocking agent described later, and if necessary, an aminocarboxylic acid, a lactam, a catalyst, and the like are mixed to produce a nylon salt. Next, the produced nylon salt is heated to a temperature of 200 to 250°C and subjected to heat polymerization, whereby a semi-aromatic polyamide can be obtained as a prepolymer.

Further, the molecular weight of the semi-aromatic polyamide can be adjusted to a desired value by subjecting the prepolymer to solid phase polymerization or by increasing the degree of polymerization using a melt extruder.

In a case where the stage of increasing the degree of polymerization is performed by a solid phase polymerization method, it is preferable to perform the stage under reduced pressure or under an inert gas flow, and when the polymerization temperature is within a range of 200 to 280°C, the polymerization rate is high, the productivity is excellent, and coloration and gelation can be effectively suppressed. On the other hand, in a case where the stage of increasing the degree of polymerization is performed by a melt extruder, the polymerization temperature is preferably 370°C or lower, and when the polymerization is carried out under such conditions, a semi-aromatic polyamide with little decomposition and little deterioration is obtained.

Examples of the catalyst that can be used in producing the semi-aromatic polyamide include phosphoric acid, phosphorus acid, hypophosphorous acid, and salts and esters thereof. Examples of the salts and esters include a salt of phosphoric acid, phosphorus acid, or hypophosphorous acid with a metal such as potassium, sodium, magnesium, vanadium, calcium, zinc, cobalt, manganese, tin, tungsten, germanium, titanium, or antimony; an ammonium salt of phosphoric acid, phosphorus acid, or hypophosphorous acid; and an ethyl ester, an isopropyl ester, a butyl ester, a hexyl ester, an isodecyl ester, an octadecyl ester, a decyl ester, a stearyl ester, and a phenyl ester of phosphoric acid, phosphorus acid, or hypophosphorous acid.

The amount of the catalyst used is preferably 0.01% by mass or more, and more preferably 0.05% by mass or

more, with respect to 100% by mass of the total mass of the raw materials of the semi-aromatic polyamide. The amount of the catalyst used is preferably 1.0% by mass or less, and more preferably 0.5% by mass or less. When the amount of the catalyst used is equal to or greater than the above lower limit value, the polymerization will proceed more favorably.

[Terminal Amino Group Content (Before Terminal Conversion)]

In semi-aromatic polyamide of the present embodiment, the terminal of the semi-aromatic polyamide can be adjusted to a desired functional group or a desired amount of functional groups by a terminal functionalizing agent described later.

On the other hand, the terminal amino group content referred to herein is the terminal amino group content in the polyamide before the terminal conversion with the terminal functionalizing agent.

The above-described semi-aromatic polyamide before terminal conversion has a terminal amino group content ($[NH_2]$), which is the content of terminal amino groups, of preferably 1 to 4,000 μmol/g, more preferably 1 to 3,000 μmol/g, still more preferably 1 to 2,500 μmol/g, yet still more preferably 1 to 2,000 μmol/g, even yet still more preferably 1 to 1,500 μmol/g, even yet still more preferably 1 to 1,000 μmol/g, and even yet still more preferably 1 to 800 μmol/g.

The terminal amino group content ($[NH_2]$) as used herein refers to the amount (unit: μmol) of terminal amino groups contained in 1 g of the semi-aromatic polyamide, and can be determined by a neutralization titration method using an indicator.

[Terminal Carboxy Group Content (Before Terminal Conversion)]

The above-described semi-aromatic polyamide before terminal conversion has a terminal carboxy group content ([COOH]), which is the content of terminal carboxy groups, of preferably 1 to 5,000 μmol/g, more preferably 25 to 4,000 μmol/g, still more preferably 50 to 3,000 μmol/g, yet still more preferably 75 to 2,500 μmol/g, even yet still more preferably 75 to 2,000 μmol/g, even yet still more preferably 75 to 1,500 μmol/g, and even yet still more preferably 75 to 1,000 μmol/g.

The terminal carboxy group content ([COOH]) as used herein refers to the amount (unit: μmol) of terminal carboxy groups contained in 1 g of the semi-aromatic polyamide, and can be determined by a potentiometric titration method.

[Melting Point]

The melting point of the semi-aromatic polyamide is preferably 200°C or higher, more preferably 205°C or higher, still more preferably 210°C or higher, yet still more preferably 230°C or higher, even yet still more preferably 240°C or higher, and even yet still more preferably 250°C or higher. When the melting point of the polyamide is 230°C or higher, the heat resistance of the polyamide block copolymer is likely to be further improved. The upper limit of the melting point of the polyamide is not particularly limited, and is preferably 320°C or lower from the viewpoint of moldability and the like. That is, the melting point of the semi-aromatic polyamide is preferably 230 to 320°C.

In the present invention, the melting point can be determined as the peak temperature of a melting peak that appears when the temperature is raised at a rate of 10°C/min using a differential scanning calorimeter (DSC). More specifically, it can be determined by the method described in Examples described later.

[Semi-Aromatic Ratio]

The semi-aromatic ratio of the polyamide can be determined by methods well known to those skilled in the art. The semi-aromatic ratio of the polyamide means the ratio (percentage) of the repeating unit of the semi-aromatic polyamide among the repeating units constituting the polyamide. The semi-aromatic ratio of the polyamide can be determined, for example, by using NMR, and in this case, the ratio is a molar ratio. From the viewpoint of obtaining a polyamide block copolymer having excellent heat resistance, the semi-aromatic ratio of the polyamide is preferably 30% or more, more preferably 60% or more, still more preferably 75% or more, yet still more preferably 80% or more, and even yet still more preferably 85% or more. The upper limit of the semi-aromatic ratio of the polyamide may be 100%. In a preferred embodiment of the present embodiment, the semi-aromatic ratio of the polyamide is 90% or more, and preferably 94% or more. In a particular embodiment, the semi-aromatic ratio of the polyamide is 100%.

[Molecular Weight]

The number-average molecular weight of the polymer block (A) is preferably 300 to 12,000, more preferably 300 to 11,000, still more preferably 350 to 10,000, yet still more preferably 400 to 9,500, and even yet still more preferably 500 to 9,000, and may be 600 to 8,500 or may be 700 to 8,000. Within the above numerical range, the compatibility between the

polymer block (A) and the polymer block (B) is excellent, and the heat resistance of the polyamide block copolymer can be further improved.

The weight-average molecular weight of the polymer block (A) may be preferably 1,000 to 50,000, more preferably 1,100 to 45,000, still more preferably 1,200 to 40,000, yet still more preferably 1,300 to 40,000, even yet still more preferably 1,400 to 36,000, may be 1,500 to 30,000, may be 1,600 to 25,000, or may be 2,000 to 20,000. Within the above numerical range, the compatibility between the polymer block (A) and the polymer block (B) is excellent, and the heat resistance of the polyamide block copolymer can be further improved.

In the present invention, the number-average molecular weight and the weight-average molecular weight can be measured by gel permeation chromatography, and more specifically, are values measured by the method described in Examples.

[Terminal Functionalizing Agent]

In the present embodiment, a terminal functionalizing agent can be used in order to obtain a polymer block (A) in which the terminal of the polymer block (A), preferably the terminal of the semi-aromatic polyamide, is adjusted to a desired functional group or a desired amount of functional groups.

For example, the terminal of the polyamide can be converted by reacting the prepolymer of the polyamide described above with a terminal functionalizing agent. It is also possible to convert the terminal of the polyamide by making either one of the dicarboxylic acid unit and the diamine unit excessive at the stage of charging the raw materials. By adjusting the terminal of the polymer block (A) to a desired functional group or a desired amount of functional groups, the polymer block (A) and the polymer block (B) can be bonded to each other more favorably. The unit derived from the terminal functionalizing agent is included in the polymer block (A).

When the semi-aromatic polyamide obtained by the method for producing a semi-aromatic polyamide described above has a desired functional group or a desired amount of functional groups, a terminal functionalizing agent may not be used. That is, in this case, the polymer block (A) and the polymer block (B) can be favorably bonded to each other by reacting the polymer constituting the polymer block (A) with the polymer constituting the polymer block (B) without using a terminal functionalizing agent.

The amount of active terminal functional groups of the semi-aromatic polyamide described later can be adjusted, for example, by adjusting the amount of carboxy groups and the amount of amino groups contained in the reaction raw materials in the production of the semi-aromatic polyamide.

The terminal functionalizing agent is not limited as long as the effects of the present invention are not impaired, and examples thereof include those capable of introducing a functional group such as a hydroxy group, a carboxy group, an amino group, an epoxy group, a mercapto group, a sulfonyl group, a halogen atom, a vinyl group, or a vinylidene group to the terminal of the polyamide.

In the present embodiment, a compound selected from the group consisting of dicarboxylic acids and diamines is preferably used as the terminal functionalizing agent. In this case, the polymer block (A) contains the constitutional unit derived from a polyamide and a constitutional unit derived from a compound selected from the group consisting of a dicarboxylic acid and a diamine.

Examples of the dicarboxylic acid that can be used as a terminal functionalizing agent include aliphatic dicarboxylic acids and aromatic dicarboxylic acids.

Examples of the aliphatic dicarboxylic acid include linear aliphatic dicarboxylic acids such as oxalic acid, malonic acid, succinic acid, glutaric acid, adipic acid, pimelic acid, suberic acid, azelaic acid, sebacic acid, undecanedicarboxylic acid, and dodecanedicarboxylic acid;

> branched aliphatic dicarboxylic acids such as 2,2-diethylsuccinic acid, 2,2-dimethylglutaric acid, 2-methyladipic acid, and trimethyladipic acid; and
> alicyclic dicarboxylic acids such as 1,3-cyclopentanedicarboxylic acid and 1,4-cyclohexanedicarboxylic acid.

Examples of the aromatic dicarboxylic acid include terephthalic acid, isophthalic acid, diphenic acid, 4,4'-biphenyldicarboxylic acid, diphenylmethane-4,4'-dicarboxylic acid, diphenylsulfone-4,4'-dicarboxylic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, 2,7-naphthalenedicarboxylic acid, 2,3-furandicarboxylic acid, 2,4-furandicarboxylic acid, 2,5-furandicarboxylic acid, and 3,4-furandicarboxylic acid.

Examples of the diamine that can be used as a terminal functionalizing agent include aliphatic diamines and aromatic diamines.

Examples of the aliphatic diamine include linear aliphatic diamines such as ethylenediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, and 1,18-octadecanediamine;

branched aliphatic diamines such as 1,2-propanediamine, 1-butyl-1,2-ethanediamine, 1,1-dimethyl-1,4-butanediamine, 1-ethyl-1,4-butanediamine, 2-ethyl-1,4-butanediamine, 1,2-dimethyl-1,4-butanediamine, 1,3-dimethyl-1,4-butanediamine, 1,4-dimethyl-1,4-butanediamine, 2-methyl-1,3-propanediamine, 2-methyl-1,4-butanediamine, 2,3-dimethyl-1,4-butanediamine, 2-methyl-1,5-pentanediamine, 3-methyl-1,5-pentanediamine, 2-ethyl-1,5-pentanediamine, 2-propyl-1,5-pentanediamine, 2-butyl-2-ethyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2-ethyl-1,6-hexanediamine, 2-propyl-1,6-hexanediamine, 2,4-diethyl-1,6-hexanediamine, 2-ethyl-1,7-heptanediamine, 2-propyl-1,7-heptanediamine, 2-methyl-1,8-octanediamine, 3-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 2-ethyl-1,8-octanediamine, 2-methyl-1,9-nonanediamine, and 5-methyl-1,9-nonanediamine; and

alicyclic diamines such as 1,2-cyclohexanediamine, 1,4-cyclohexanediamine, 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, and bis(aminopropyl)piperazine.

Examples of the aromatic diamine include p-phenylenediamine, m-phenylenediamine, p-xylylenediamine, m-xylylenediamine, 4,4'-diaminodiphenylmethane, 4,4'-diaminodiphenyl sulfone, 4,4'-diaminodiphenyl ether, and 4,4'-methylene-bis-2,6-diethylaniline.

The above-described terminal functionalizing agent may be only one kind or may be two or more kinds.

(Active Terminal Functional Group Content)

In the present invention, the "active terminal functional group content" is the content of the active terminal functional group of the polymer block (A) contained in the polyamide block copolymer, and the total content of the active terminal functional groups of the semi-aromatic polyamide is the active terminal functional group content of the polymer block (A). The "active terminal functional group" is a functional group exhibiting reaction activity to the terminal functional group of the polymer block (B), and examples thereof include an amino group and a carboxy group.

When the terminal of the semi-aromatic polyamide is converted using a terminal functionalizing agent, the "active terminal functional group content" is the content of the active terminal functional group after the conversion of the terminal functional group. For example, in a case where a semi-aromatic polyamide having an amino group at the terminal is converted into a carboxy group using a terminal functionalizing agent, the total content of the terminal carboxy group after conversion and the terminal amino group which is not converted is the active terminal functional group content of the polymer block (A).

The active terminal functional group content of the polymer block (A) may be a functional group content capable of sufficiently reacting with the terminal functional group of the polymer block (B), and is preferably 5 μmol/g or more or 50 to 5,000 μmol/g, more preferably 75 to 4,500 μmol/g, still more preferably 100 to 4,000 μmol/g, yet still more preferably 120 to 4,000 μmol/g, even yet still more preferably 150 to 3,000 μmol/g, even yet still more preferably 200 to 2,000 μmol/g, even yet still more preferably 250 to 1,500 μmol/g, and even yet still more preferably 300 to 1,250 μmol/g. When the active terminal functional group content is 5 μmol/g or more, the compatibility between the polymer block (A) and the polymer block (B) is excellent, and the flexibility of the polyamide block copolymer can be further improved. On the other hand, when the active terminal functional group content is 5,000 μmol/g or less, the heat resistance of the polyamide block copolymer can be further improved.

The active terminal functional group content as used herein refers to the amount (unit: μmol) of active terminal functional groups contained in 1 g of the polyamide (the polyamide after conversion when a terminal functionalizing agent is used), and can be determined by a neutralization titration method and a potentiometric titration method using an indicator.

<Polymer Block (B)>

The polymer block (B) has a glass transition temperature of 20°C or lower.

When the glass transition temperature exceeds 20°C, it is difficult for the polyamide block copolymer to have excellent flexibility.

The glass transition temperature of the polymer block (B) is preferably 0°C or lower, and more preferably -20°C or lower, from the viewpoint of easily exhibiting excellent flexibility at room temperature in the polyamide block copolymer. The glass transition temperature of the polymer block (B) is preferably as low as possible, but may be -120°C or higher from the viewpoint of heat resistance.
That is, the glass transition temperature of the polymer block (B) is preferably -120 to 0°C.
In the present invention, the glass transition temperature can be determined as the temperature at an inflection point that appears when the temperature is raised at a rate of 2°C/min using a differential scanning calorimeter (DSC). More specifically, it can be determined by the method described in Examples described later. Alternatively, when it is difficult to measure the glass transition temperature by the above method, a literature value or a measurement result of a manufacturer can be adopted as the above glass transition temperature. However, as the glass transition temperature, a value obtained by a method described in Examples described later is preferentially adopted.

[Polymer Unit]

The polymer block (B) preferably contains an oxygen atom in the main chain. The polymer block (B) effectively exhibits flexibility by containing an oxygen atom, preferably an ether bond, in the main chain. That is, the polymer block (B) preferably contains a constitutional unit derived from an oxygen atom-containing polymer which provides the polymer block (B) containing an oxygen atom in the main chain (hereinafter, referred to as an "oxygen atom-containing polymer").
From the viewpoint that the polyamide block copolymers easily obtain excellent flexibility, the content ratio of the constitutional unit derived from the oxygen atom-containing polymer in the polymer block (B) is preferably 50 mol% or more, more preferably 70 mol% or more, and still more preferably 90 mol% or more, and may be 100 mol%. On the other hand, the content ratio of the constitutional unit derived from the oxygen atom-containing polymer in the polymer block (B) may be 100 mol% or less.
That is, the content ratio of the constitutional unit derived from the oxygen atom-containing polymer in the polymer block (B) is preferably 50 to 100 mol%.
In the polymer block (B), the constitutional unit other than the constitutional unit derived from the above-described oxygen atom-containing polymer is not limited as long as the effects of the present invention can be obtained.
Examples of the oxygen atom-containing polymer include polyether, polyester, polycarbonate, and polysiloxane. Details of the polyether, polyester, polycarbonate, and polysiloxane will be described later. Among these, polyether is preferable as the oxygen atom-containing polymer from the viewpoint of easily imparting excellent flexibility.

<Polyether>

In the present embodiment, "polyether" means a polyether polyol, and also includes derivatives such as an amine derivative and a carboxy derivative of a polyether polyol. As the polyether, one kind or two or more kinds can be used. When the oxygen atom-containing polymer is a polyether polyol, an amine derivative thereof, or a carboxy derivative thereof, the polymer block (B) contains a constitutional unit derived from the polyether polyol, the carboxy derivative thereof, or the amine derivative thereof. Preferably, the polymer block (B) contains a constitutional unit derived from polyether polyol, an amine derivative thereof, or a carboxy derivative thereof in an amount of 50 mol% or more.
Examples of the polyether include polyethylene glycol (PEG), polypropylene glycol (PPG), polytrimethylene ether glycol (PO3G), poly(oxybutylene) glycol, polytetramethylene ether glycol (PTMG), poly(3-alkyltetrahydrofuran), particularly poly(3-methyltetrahydrofuran) (poly(3MeTHF)), polypentamethylene ether glycol, polyhexamethylene ether glycol, polyoctamethylene ether glycol, and copolymers thereof. These may be used alone or in combination of two or more.
Examples of the amine derivative and the carboxy derivative of the polyether include polyether diamine and polyether dicarboxylic acid. Among these, from the viewpoint of imparting more excellent flexibility to the polyamide block copolymer having the polymer block (A) as a hard segment, and allowing the polyamide block copolymer to exhibit excellent chemical resistance, a polyether diamine is preferable.
Examples of the polyether diamine include polyethylene glycol (PEG), polypropylene glycol (PPG), polytrimethylene ether glycol (PO3G), poly(oxybutylene) glycol, polytetramethylene ether glycol (PTMG), poly(3-alkyltetrahydrofuran), particularly poly(3-methyltetrahydrofuran) (poly(3MeTHF)), polypentamethylene ether glycol, polyhexamethylene ether glycol, and polyoctamethylene ether glycol, and copolymers thereof in which amino groups are introduced into two terminals thereof. These may be used alone or in combination of two or more. Such polyether diamines can be obtained, for example, by cyanoacetylation of polyetherdiols.
Examples of the polyether dicarboxylic acid include polyethylene glycol (PEG), polypropylene glycol (PPG), polytrimethylene ether glycol (PO3G), poly(oxybutylene) glycol, polytetramethylene ether glycol (PTMG), poly(3-alkyltetrahydrofuran), particularly poly(3-methyltetrahydrofuran) (poly(3MeTHF)), polypentamethylene ether glycol, polyhexamethylene ether glycol, and polyoctamethylene ether glycol, and copolymers thereof in which carboxy groups are

introduced into two terminals thereof. These may be used alone or in combination of two or more.

<Polyester>

In the present embodiment, "polyester" means a polyester polyol, and also includes derivatives such as an amine derivative and a carboxy derivative of a polyester polyol. As the polyester, one kind or two or more kinds can be used. When the oxygen atom-containing polymer is a polyester polyol, an amine derivative thereof, or a carboxy derivative thereof, the polymer block (B) contains a constitutional unit derived from the polyester polyol, the amine derivative thereof, or the carboxy derivative thereof.

Examples of the polyester include poly(caprolactone) diol (PCL), poly(methyl valerolactone) diol, poly(ethylene adipate) glycol, poly(butylene-1,4-adipate) glycol (PBA), poly(methylpentanediol adipate) glycol, and poly(butylene-1,4-hexanediol-1,6-adipate) glycol. These may be used alone or in combination of two or more.

As the above-described polyester, for example, a polyester produced by polycondensation of a dicarboxylic acid and a polyhydric alcohol can be used.

Examples of the dicarboxylic acid include aliphatic dicarboxylic acids such as 1,4-cyclohexyldicarboxylic acid, succinic acid, glutaric acid, adipic acid, pimelic acid, suberic acid, azelaic acid, sebacic acid, undecanedicarboxylic acid, dodecanedicarboxylic acid, tetradecanedicarboxylic acid, and 1,18-octadecanedicarboxylic acid; and dimer fatty acids consisting of one or two selected from unsaturated fatty acids such as oleic acid, linoleic acid, linolenic acid, palmitoleic acid, and elaidic acid. These may be used alone or in combination of two or more.

Examples of the polyhydric alcohol include ethylene glycol, propylene glycol, 1,4-butanediol, 1,5-pentanediol, 3-methyl-1,5-pentanediol, 1,6-hexanediol, 1,7-heptanediol, 1,8-octanediol, 1,9-nonanediol, 1,10-decanediol, 1,11-undecanediol, 1,12-dodecanediol, and 1,4-cyclohexanedimethanol. These may be used alone or in combination of two or more.

Examples of the above-described amine derivative in the polyester include those obtained by introducing an amino group into the terminal of a polyester polyol or the like. These may be used alone or in combination of two or more.

Examples of the above-described carboxy derivative in the polyester include those obtained by introducing a carboxy group into the terminal of a polyester polyol or the like. The above-described carboxy derivative may have at least one carboxy group at a terminal, and may have, for example, carboxy groups at all terminals, or may have both a carboxy group and a hydroxy group at a terminal. These may be used alone or in combination of two or more.

<Polycarbonate>

In the present embodiment, "polycarbonate" means a polycarbonate polyol, and also includes derivatives such as an amine derivative and a carboxy derivative of a polycarbonate polyol. As the polycarbonate, one kind or two or more kinds can be used. When the oxygen atom-containing polymer is a polycarbonate polyol, an amine derivative thereof, or a carboxy derivative thereof, the polymer block (B) contains a constitutional unit derived from the polycarbonate polyol, the amine derivative thereof, or the carboxy derivative thereof.

Examples of the polycarbonate include poly(hexanediol-1,6-carbonate) diol, and polytetrahydrofuran carbonate diol (PCD). These may be used alone or in combination of two or more.

As the above-described polycarbonate, for example, a polycarbonate produced by an esterifying reaction between a carbonic acid ester and a polyhydric alcohol, or a polycarbonate produced by an interfacial polycondensation method in which a polyhydric alcohol and phosgene are reacted can be used.

Examples of the carbonic acid ester include methyl carbonate, ethyl carbonate, and phenyl carbonate. These may be used alone or in combination of two or more.

Examples of the polyhydric alcohol include ethylene glycol, propylene glycol, 1,4-butanediol, 1,5-pentanediol, 3-methyl-1,5-pentanediol, 1,6-hexanediol, 1,7-heptanediol, 1,8-octanediol, 1,9-nonanediol, 1,10-decanediol, 1,11-undecanediol, 1,12-dodecanediol, and 1,4-cyclohexanedimethanol. These may be used alone or in combination of two or more.

Examples of the above-described amine derivative in the polycarbonate include those obtained by introducing an amino group into the terminal of a polycarbonate polyol or the like. These may be used alone or in combination of two or more.

Examples of the above-described carboxy derivative in the polycarbonate include those obtained by introducing a carboxy group into the terminal of a polycarbonate polyol or the like. The above-described carboxy derivative may have at least one carboxy group at a terminal, and may have, for example, carboxy groups at all terminals, or may have both a carboxy group and a hydroxy group at a terminal. These may be used alone or in combination of two or more.

<Polysiloxane>

In the present embodiment, "polysiloxane" means a polysiloxane polyol, and also includes derivatives such as an amine derivative and a carboxy derivative of a polysiloxane polyol. As the polysiloxane, one kind or two or more kinds can be used. When the oxygen atom-containing polymer is a polysiloxane polyol, an amine derivative thereof, or a carboxy derivative thereof, the polymer block (B) contains a constitutional unit derived from the polysiloxane polyol, the amine derivative thereof, or the carboxy derivative thereof.

Examples of the polysiloxane include a compound having a hydroxy group at the terminal of a polyorganosiloxane having a repeating unit represented by the following formula (X). Specific examples thereof include polydimethylsiloxane diol, polydiphenylsiloxane diol, polytrifluoropropylmethylsiloxane diol, polyphenylmethylsiloxane diol, polydiethylsiloxane diol, polydivinylsiloxane diol, polyvinylmethylsiloxane diol, and poly(5-hexenyl)methylsiloxane diol.

[Chem. 1]

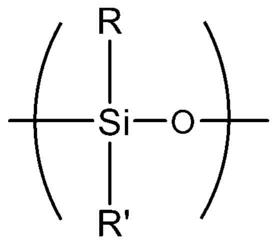

(X)

R and R' in the formula (X) are organic groups, and may be the same or different. The above-described organic group is not limited as long as the effects of the present invention are not impaired, and examples thereof include alkyl groups having 1 to 8 carbon atoms such as a methyl group, an ethyl group, a propyl group, a butyl group, a pentyl group, a hexyl group, a heptyl group, and an octyl group; alkenyl groups having 1 to 5 carbon atoms such as a vinyl group, an allyl group, a 1-butenyl group, a 2-butenyl group, a 3-butenyl group, a 1-methylvinyl group, and a 1-methylallyl group; alicyclic alkyl groups such as a cyclohexyl group; and aryl groups such as a phenyl group, a tolyl group, a xylyl group, a benzyl group, and a 2-phenylethyl group.

Examples of the above-described amine derivative in the polysiloxane include those obtained by introducing an amino group into the terminal of a polysiloxane polyol or the like. These may be used alone or in combination of two or more.

Examples of the above-described carboxy derivative in the polysiloxane include those obtained by introducing a carboxy group into the terminal of a polysiloxane polyol or the like. These may be used alone or in combination of two or more.

[Molecular Weight]

The number-average molecular weight of the polymer block (B) is preferably 100 or more, 150 or more, or 200 or more, more preferably 300 or more, or 400 or more, and from the viewpoint of obtaining a polyamide block copolymer having more excellent flexibility, particularly tensile properties, the number-average molecular weight may be 500 or more, 700 or more, or 800 or more. The number-average molecular weight of the polymer block (B) is not limited as long as the polymerization reaction with the polymer block (A) favorably proceeds, and may be, for example, 7,000 or less, 6,000 or less, or 5,000 or less. That is, the number-average molecular weight of the polymer block (B) is preferably 100 to 7,000, and more preferably 200 to 5,000. Within the above numerical range, the polymerization reaction with the polymer block (A) favorably proceeds, and the flexibility of the polyamide block copolymer is excellent, so that the tensile properties tend to be further excellent.

<Method for Producing Polyamide Block Copolymer>

In the method for producing the polyamide block copolymer of the present embodiment, it is preferable to mix and polymerize a polymer constituting the polymer block (A) containing the constitutional unit derived from the semi-aromatic polyamide in an amount of 50 mol% or more described above and a polymer constituting the polymer block (B) having a glass transition temperature of 20°C or lower described above by using a terminal blocking agent described later. As exemplified below, the terminal blocking agent can be used at any stage of the production process. In addition, in the method for producing the polyamide block copolymer of the present embodiment, the above-described terminal functionalizing agent may be used.

For example, the polyamide block copolymer may be produced by mixing a monomer constituting the above-described polymer block (A) with a terminal blocking agent described later and, if necessary, the terminal functionalizing agent, melt-polymerizing the mixture to obtain a polymer constituting the polymer block (A) in which the terminal functional group is adjusted, and then adding a polymer constituting the above-described polymer block (B) and melt-polymerizing the polymer.

As a first specific example, the polyamide block copolymer may be produced by dryblending a polymer constituting the polymer block (A) which are melt-polymerized in the presence of a terminal blocking agent described later in the polymerization stage of the polymer block (A) to adjust the terminal functional group, and a polymer constituting the polymer block (B), in the presence of the terminal functionalizing agent as necessary, and melt-kneading the mixture.

As a second specific example, the terminal functional group of the polymer block (A) may be adjusted by reacting the polymer constituting the polymer block (A) with a terminal blocking agent described later and the terminal functionalizing agent as necessary, followed by pulverization, then the polymer constituting the polymer block (B) may be added and mixed, and the mixture may be melt-polymerized.

As a third specific example, the polymer constituting the polymer block (A), a terminal blocking agent described later, and the terminal functionalizing agent as necessary may be charged from an upper hopper of a melt kneader and reacted, and then the polymer block (B) may be added from a side feed port on the downstream side of the extruder to perform melt extrusion polymerization stepwise.

As the polymerization method, methods such as a melt polymerization method, a solid phase polymerization method, and a melt extrusion polymerization method can be usually adopted. The solid phase polymerization method may be combined after performing the melt polymerization method or the melt extrusion polymerization method. As the melt extrusion polymerization method, a method of melt-kneading using a single-screw extruder, a twin-screw extruder, a kneader, or a Banbury mixer is preferably adopted. The melt-kneading conditions are not particularly limited, and, for example, a method of melt-kneading for about 1 to 120 minutes in a temperature range higher than the melting point of the polyamide by about 0 to 60°C is preferable from the viewpoint of more easily exhibiting the effects of the present invention.

The polyamide block copolymer of the present embodiment can be obtained, for example, by mixing and polymerizing the respective polymers constituting the hard segment and the soft segment. By mixing and polymerizing the previously prepared polymer block (A) and the previously prepared polymer block (B) in this manner, the polyamide block copolymer of the present embodiment contains blocks intended as the polymer blocks constituting the respective segments. The polyamide block copolymer of the present embodiment tends to have excellent heat resistance when containing the intended blocks as described above. In addition, when the polymer block constituting each segment is derived from the previously prepared polymer, the characteristics of each polymer block are easily exhibited. As a result, it is considered that the polyamide block copolymer of the present embodiment contributes to improvement in thermal stability.

<Terminal Blocking Ratio>

The polyamide block copolymer of the present embodiment is characterized by having a terminal blocking ratio of 10% or more. The "terminal blocking ratio" means a ratio (percentage) of terminals blocked by the terminal blocking agent to the total number of molecular chain terminal groups including terminals blocked by the terminal blocking agent, carboxy group terminals, amino group terminals, and the like in the polyamide block copolymer.

The mobility of molecular chain terminals such as carboxy group terminals and amino group terminals in polyamide block copolymers may promote thermal degradation. In addition, terminal groups with high mobility may reduce thermal stability. Therefore, in order to suppress the promotion of thermal deterioration due to the mobility of the molecular chain terminal, the functional group at the molecular chain terminal is substituted with another terminal group, preferably a terminal group that maintains the crystallinity of the polyamide block copolymer or a terminal group having a high cohesive force, using a terminal blocking agent described later, whereby the thermal stability can be improved.

The polyamide copolymer of the present embodiment is excellent in thermal stability as compared with a polyamide block copolymer having the same constitution but having a terminal blocking ratio of less than 10%.

From the viewpoint of further improving the thermal stability of the polyamide block copolymer, the terminal blocking ratio is preferably 15% or more, more preferably 20% or more, still more preferably 25% or more, yet still more preferably 30% or more, and even yet still more preferably 40% or more. In addition, since the thermal stability tends to be easily improved as the terminal blocking ratio is higher, the upper limit value of the terminal blocking ratio may be 100% from the viewpoint of improving the thermal stability. That is, the terminal blocking ratio is preferably 10% to 100%.

The terminal blocking ratio can be adjusted by the amount of the above-described terminal blocking agent charged relative to the diamine at the time of charging the raw materials for polymerization of the semi-aromatic polyamide. In consideration of volatilization of the monomer component during the above-described polymerization, it is desirable to finely adjust the amount of the terminal blocking agent charged at the time of charging the raw materials for polymerization so that the terminal blocking ratio falls within the above numerical range. In addition, when the polymer constituting the polymer block (A) and the polymer constituting the above-described polymer block (B) are polymerized, the terminal

blocking agent can be charged so that the terminal blocking ratio is within the above numerical range. In addition, the terminal blocking agent may be charged to the polymer constituting the polymer block (A) together with the above-described terminal functionalizing agent so that the terminal blocking ratio falls within the above numerical range.

In determining the terminal blocking ratio, the total number of terminal groups and the number of active terminal groups present in the polyamide block copolymer are determined respectively, and the terminal blocking ratio can be calculated by the following Equation (1).

$$\text{Equation (1):}$$

$$\text{Terminal blocking ratio (\%)} = [(A - B) \div A] \times 100$$

In Equation (1), A represents the total number of terminal groups (μmol/g). The total number of terminal groups is usually equal to twice the number of polyamide molecules.

B represents the number of active terminal groups (μmol/g). The number of active terminal groups is, for example, the total number of active terminal groups such as a carboxy group terminal, an amino group terminal, and a hydroxy group.

(A - B) represents the number of blocked terminal groups (μmol/g).

The total number of terminal groups can be calculated by the following method.

$$\text{Total number of terminal groups } (\mu\text{mol/g}) = 2000000/\text{Mn}$$

(Mn represents a number-average molecular weight.)

The number of active terminal groups can be determined by titration. Here, as an example of a method for determining the number of active terminal groups, a method for determining the number of carboxy group terminals and the number of amino group terminals will be described below.

The number of carboxy group terminals (μmol/g) can be determined by titrating a cresol solution of the polyamide block copolymer with a 0.1N potassium hydroxide-ethanol solution.

The number of amino group terminals (mol/g) can be determined by titrating a phenol solution of the polyamide block copolymer with 0.1N hydrochloric acid.

More specifically, it can be determined by the method described in Examples described later.

[Terminal Blocking Agent]

As the terminal blocking agent, a monofunctional compound having reactivity with a terminal amino group or a terminal carboxy group can be used. Specific examples thereof include monocarboxylic acids, acid anhydrides, monoisocyanates, monoacid halides, monoesters, monohydric alcohols, and monoamines. From the viewpoints of reactivity and stability of blocked terminals, a monocarboxylic acid is preferable as the terminal blocking agent for terminal amino groups, and a monoamine is preferable as the terminal blocking agent for terminal carboxy groups. From the viewpoint of ease of handling, a monocarboxylic acid is more preferable as the terminal blocking agent.

Only one kind of the terminal blocking agent may be used, or two or more kinds thereof may be used.

The monocarboxylic acid used as the terminal blocking agent is not particularly limited as long as it is a monocarboxylic acid that has reactivity with an amino group, can at least suppress the mobility of the molecular chain terminal of the polyamide block copolymer, and from such a viewpoint, preferably has a high cohesive force or maintains the crystallinity of the polyamide block copolymer. Examples of the monocarboxylic acid include aliphatic monocarboxylic acids such as formic acid, acetic acid, propionic acid, butyric acid, decanoic acid, lauric acid, tridecanoic acid, myristic acid, palmitic acid, stearic acid, behenic acid, and pivalic acid; alicyclic monocarboxylic acids such as cyclopentanecarboxylic acid and cyclohexanecarboxylic acid; aromatic monocarboxylic acids such as benzoic acid, toluic acid, α-naphthalenecarboxylic acid, β-naphthalenecarboxylic acid, and methylnaphthalenecarboxylic acid; monocarboxylic acids having an aromatic alkyl group such as phenylacetic acid; and arbitrary mixtures thereof. Among these, at least one selected from acetic acid, propionic acid, butyric acid, decanoic acid, lauric acid, tridecanoic acid, myristic acid, palmitic acid, stearic acid, and benzoic acid is preferable from the viewpoint of reactivity, stability of the blocked terminal, cost, and the like, and benzoic acid is more preferable from the viewpoint of easily obtaining more excellent thermal stability.

The monoamine used as the terminal blocking agent is not particularly limited as long as it is a monoamine that has reactivity with a carboxy group, can at least suppress the mobility of the molecular chain terminal of the polyamide block copolymer, and from such a viewpoint, preferably has a high cohesive force or maintains the crystallinity of the polyamide block copolymer. Examples of the monoamine include aliphatic monoamines such as methylamine, ethylamine, propylamine, dodecylamine, stearylamine, dimethylamine, diethylamine, and dipropylamine; alicyclic monoamines

such as cyclohexylamine and dicyclohexylamine; aromatic monoamines such as aniline, toluidine, diphenylamine, and naphthylamine; and arbitrary mixtures thereof. Among these, at least one selected from methylamine, ethylamine, propylamine, dodecylamine, stearylamine, cyclohexylamine, and aniline is preferable from the viewpoint of reactivity, stability of the blocked terminal, cost, and the like.

In addition, from the viewpoint of easily improving thermal stability, it is preferable that the molecular terminal of the polyamide block copolymer is blocked with at least one selected from the group consisting of an aryl group, an aromatic alkyl group, an alkyl group having 1 to 3 carbon atoms, an alkyl group having 9 or more carbon atoms, an alicyclic alkyl group having 4 or more carbon atoms, and a hydrogen atom.

From the viewpoint of further improving the thermal stability, it is preferable that the molecular terminal of the polyamide block copolymer is blocked with at least one selected from the group consisting of an aryl group, an aromatic alkyl group, an alkyl group having 1 to 3 carbon atoms, an alkyl group having 9 or more carbon atoms, and an alicyclic alkyl group having 4 or more carbon atoms. From the viewpoint of more further improving the thermal stability, it is more preferable that the molecular terminal of the polyamide block copolymer is blocked with at least one selected from the group consisting of an aryl group, an aromatic alkyl group, an alkyl group having 9 or more carbon atoms, and an alicyclic alkyl group having 4 or more carbon atoms. From the viewpoint of more further improving the thermal stability, it is still more preferable that the molecular terminal of the polyamide block copolymer is blocked with at least one selected from the group consisting of an aryl group, an aromatic alkyl group, and an alicyclic alkyl group having 4 or more carbon atoms. From the viewpoint of more further improving the thermal stability, it is yet still more preferable that the molecular terminal of the polyamide block copolymer is blocked with at least one selected from the group consisting of an aryl group, and an alicyclic alkyl group having 4 or more carbon atoms. It is considered that the aryl group and the alicyclic alkyl group having 4 or more carbon atoms contribute to effectively suppressing the mobility of the molecular terminal as compared with the case of other terminal groups, from at least one viewpoint of the viewpoint of increasing the cohesive force of the molecular chain terminal and the viewpoint of maintaining the crystallinity of the polymer.

Examples of the above-described aryl group include a phenyl group, a naphthyl group, an anthracenyl group, a biphenyl group, and a terphenyl group. From the viewpoint of reactivity, cost, and the like, the aryl group is preferably a phenyl group or a naphthyl group.

Examples of the terminal blocking agent capable of introducing an aryl group into a molecular terminal include benzoic acid, $\alpha$-naphthalenecarboxylic acid, and $\beta$-naphthalenecarboxylic acid.

Examples of the above-described aromatic alkyl group include a benzyl group, a phenylethyl group, and a phenylpropyl group. From the viewpoint of reactivity, cost, and the like, the aromatic alkyl group is preferably a benzyl group.

Examples of the terminal blocking agent capable of introducing an aromatic alkyl group into the molecular terminal include phenylacetic acid.

Examples of the above-described alkyl group having 1 to 3 carbon atoms include a methyl group, an ethyl group, a n-propyl group, and an isopropyl group. From the viewpoint of the stability of the blocked terminal, the alkyl group having 1 to 3 carbon atoms is preferably a methyl group or an ethyl group.

Examples of the terminal blocking agent capable of introducing an alkyl group having 1 to 3 carbon atoms into a molecular terminal include acetic acid, propionic acid, and butyric acid. The carbon constituting the alkyl group does not include carbon to which a carbonyl group is bonded.

The above-described alkyl group having 9 or more carbon atoms is a linear or branched-chain alkyl group and refers to an alkyl group having 9 or more carbon atoms in the main chain. That is, the number of carbon atoms in the main chain of such an alkyl group does not include the number of carbon atoms in the branched chain. Examples of the alkyl group having 9 or more carbon atoms in the main chain include a n-nonyl group, a n-decyl group, a n-undecyl group, a n-dodecyl group, a n-tridecyl group, a n-tetradecyl group, a n-pentadecyl group, a n-hexadecyl group, a n-heptadecyl group, a n-octadecyl group, a n-nonadecyl group, and a n-icosyl group. The alkyl group having 9 or more carbon atoms in the main chain may further have a branched chain. Examples of the branched chain include the same alkyl groups as the alkyl group having 1 to 3 carbon atoms described above.

From the viewpoint of reactivity, stability of the blocked terminal, cost, and the like, the alkyl group having 9 or more carbon atoms is preferably a linear alkyl group having 9 to 18 carbon atoms, and more preferably a lauryl group and a stearyl group.

Examples of the terminal blocking agent capable of introducing an alkyl group having 9 or more carbon atoms into the molecular terminal include monocarboxylic acids having 9 or more carbon atoms such as decanoic acid, lauric acid, and stearic acid, and monoamines having 12 or more carbon atoms such as dodecylamine and stearylamine. The carbon constituting the alkyl group does not include carbon to which a carbonyl group is bonded.

Examples of the above-described alicyclic alkyl group include a cyclopentyl group, a cyclohexyl group, a cycloheptanyl group, a cyclooctanyl group, a cyclononanyl group, and a cyclodecanyl group. From the viewpoints of reactivity, stability of the blocked terminal, cost, and the like, the alicyclic alkyl group is preferably an alicyclic alkyl group having 4 to 10 carbon atoms, and more preferably a cyclohexyl group.

Examples of the terminal blocking agent capable of introducing an alicyclic alkyl group into the molecular terminal include a monocarboxylic acid having 4 or more carbon atoms, such as cyclohexanecarboxylic acid, and a monoamine having 4 or more carbon atoms, such as cyclohexylamine. The carbon constituting the alkyl group does not include carbon to which a carbonyl group is bonded.

Examples of the terminal blocking agent capable of blocking the molecular terminal with a hydrogen atom include formic acid.

<Mass Ratio (A)/(B)>

In the polyamide block copolymer of the present embodiment, the mass ratio (A)/(B) of the polymer block (A) to the polymer block (B) is preferably 1/99 to 99/1, preferably 5/95 to 95/5, more preferably 10/90 to 95/5, still more preferably 20/80 to 95/5, yet still more preferably 40/60 to 90/10, even yet still more preferably 50/50 to 85/15, and even yet still more preferably 60/40 to 85/15. When the mass ratio (A)/(B) is within the above range, the polyamide block copolymer tends to have both excellent heat resistance and flexibility, which is preferable.

<Content Ratio of Polymer Block>

The content of the polymer block (A) in 100% by mass of the total amount of the polyamide block copolymer is preferably 40% by mass or more, more preferably 45% by mass or more, still more preferably 46% by mass or more, and yet still more preferably 49% by mass or more or 50% by mass or more from the viewpoint of obtaining a polyamide block copolymer having excellent thermal stability. On the other hand, the content of the polymer block (A) in 100% by mass of the total amount of the polyamide block copolymer is preferably 95% by mass or less, more preferably 90% by mass or less, and still more preferably 88% by mass or less or 85% by mass or less from the viewpoint of obtaining a polyamide block copolymer having excellent elongation.

The content of the polymer block (B) in 100% by mass of the total amount of the polyamide block copolymer is preferably 5% by mass or more, more preferably 10% by mass or more, still more preferably 12% by mass or more or 15% by mass or more, and may be 20% by mass or more or 25% by mass or more in some cases from the viewpoint of obtaining a polyamide block copolymer having excellent elongation. On the other hand, the content of the polymer block (B) in 100% by mass of the total amount of the polyamide block copolymer is preferably 60% by mass or less, more preferably 55% by mass or less, and still more preferably 54% by mass or less or 51% by mass or less from the viewpoint of obtaining a polyamide block copolymer having excellent thermal stability.

The total amount of the polymer block (A) and the polymer block (B) in 100% by mass of the total amount of the polyamide block copolymer is, for example, 50% by mass or more, 60% by mass or more, 70% by mass or more, or 80% by mass or more, and from the viewpoint of obtaining a polyamide block copolymer excellent in physical properties such as thermal stability and elongation, the total amount is preferably 85% by mass or more, more preferably 90% by mass or more, and still more preferably 95% by mass or more.

<Molecular Weight of Polyamide Block Copolymer>

The number-average molecular weight of the polyamide block copolymer is preferably 50,000 or less or 3,000 to 50,000, more preferably 3,000 to 40,000, still more preferably 4,000 to 30,000, yet still more preferably 4,500 to 25,000, even yet still more preferably 5,000 to 20,000, even yet still more preferably 6,000 to 20,000, and even yet still more preferably 7,000 to 20,000. The higher the molecular weight, the better the heat resistance, but the molding processability tends to decrease. Within the above numerical range, the heat resistance of the polyamide block copolymer can be further improved, and good molding processability can be expected.

The weight-average molecular weight of the polyamide block copolymer is preferably 500,000 or less or 30,000 to 500,000, more preferably 40,000 to 300,000, more preferably 43,000 to 280,000, still more preferably 45,000 to 250,000, yet still more preferably 50,000 to 230,000, and may be 65,000 to 200,000 or 75,000 to 200,000. Within the above numerical range, the polyamide block copolymer exhibits tougher material properties, and good molding processability can be expected.

The molecular weight distribution (weight-average molecular weight/number-average molecular weight) of the polyamide block copolymer is preferably 2.0 to 15.0, and more preferably 3.0 to 12.0. When the molecular weight distribution is within the above numerical range, the heat resistance of the polyamide block copolymer can be further improved, and good molding processability can be expected.

<Melting Point of Polyamide Block Copolymer>

The melting point of the polyamide block copolymer is preferably 200°C or higher, more preferably 220°C or

higher, still more preferably 230°C or higher, yet still more preferably 235°C or higher, and even yet still more preferably 240°C or higher from the viewpoint of excellent heat resistance. When the melting point of the polyamide block copolymer is 230°C or higher, superior heat resistance can be imparted to a molded article obtained by using the polyamide block copolymer. The upper limit of the melting point of the polyamide block copolymer is not particularly limited, and is preferably 315°C or lower from the viewpoint of moldability and the like. That is, the melting point of the polyamide block copolymer is preferably 200°C to 315°C, and more preferably 230°C to 315°C. In order to obtain excellent heat resistance by increasing the melting point of the polyamide block copolymer, it is preferable that the polymer block (A) contains a constitutional unit derived from a semi-aromatic polyamide in an amount of 50 mol% or more, more preferably that the polymer block (A) contains a constitutional unit derived from a non-semi-aromatic polyamide in an amount of less than 50 mol% or less, still more preferably that the polymer block (A) contains a constitutional unit derived from a non-semi-aromatic polyamide in an amount of 10 mol% or less, and yet still more preferably that the polymer block (A) does not contain a constitutional unit derived from a non-semi-aromatic polyamide (that is, 0 mol%).

<Weight Loss Rate (Thermal Stability) of Polyamide Block Copolymer>

The weight loss rate of the polyamide block copolymer of the present embodiment is preferably 3.00% or less, more preferably 2.00% or less, still more preferably 1.50% or less, yet still more preferably 1.00% or less or less than 1.00%, even yet still more preferably 0.90% or less, less than 0.84% or 0.80% or less, even yet still more preferably 0.75% or less, even yet still more preferably 0.70% or less, and may be 0.50% or less.

In the present invention, the weight loss rate of the polyamide block copolymer can be measured using a thermogravimetric apparatus, and more specifically, is a value measured by a method described in Examples.

<Tensile Strength at Break and Tensile Elongation at Break (Tensile Properties) of Polyamide Block Copolymer>

The tensile strength at break of the polyamide block copolymer of the present embodiment, as measured in accordance with JIS K 7161-1:2014, is preferably 5 MPa or more, more preferably 10 MPa or more, still more preferably 20 MPa or more, and yet still more preferably 30 MPa or more, and may be 35 MPa or more.

The tensile elongation at break of the polyamide block copolymer of the present embodiment, as measured in accordance with JIS K 7161-1:2014 is preferably 30% or more, more preferably 40% or more, still more preferably 50% or more, yet still more preferably 100% or more, even yet still more preferably 150% or more, even yet still more preferably 200% or more, and even yet still more preferably 250% or more, and may be 300% or more.

As used herein, tensile properties are an indicator of flexibility. It can be said that the larger the numerical value of the above-described tensile elongation at break is, the more excellent flexibility the polyamide block copolymer has.

More specifically, the above-described tensile strength at break and the above-described tensile elongation at break can be determined by the methods described in Examples described later.

<<Polyamide Block Copolymer Composition>>

As one of the present embodiments, a polyamide block copolymer composition containing the above-described polyamide block copolymer can be provided.

The polyamide block copolymer composition is produced by adding a component other than the polyamide block copolymer to the polyamide block copolymer. Examples of the component include additives such as an antioxidant, an ozone-cracking preventive agent, a weathering stabilizer, an ultraviolet absorber, a stabilizer against hydrolysis, a filler, a crystal nucleating agent, a reinforcing agent, carbon black, a pigment, an inorganic dye, an organic dye, a colorant, a coloring inhibitor, an anti-gelling agent, a matting agent, an antistatic agent, a plasticizer, a lubricant, a mold release agent, a shrinkage resistance agent, a compatibilizer, a flame retardant, a flame retardant aid, and a foaming agent.

Only one kind thereof may be contained, or two or more kinds thereof may be contained.

The content of the additive is not particularly limited as long as the effects of the present invention are not impaired, and may be 0.02 to 200 parts by mass with respect to 100 parts by mass of the polyamide block copolymer.

Examples of the method for adding the additive include a method in which the additive is added at the time of polymerization of the polyamide block copolymer, and a method in which the additive is dry-blended with the polyamide block copolymer and melt-kneaded.

[Method for Producing Polyamide Block Copolymer Composition]

The method for producing the polyamide block copolymer composition is not particularly limited, and a method capable of uniformly mixing the polyamide block copolymer and the additive can be preferably adopted. For the mixing, in general, a melt-kneading method using a single screw extruder, a twin screw extruder, a kneader, a Banbury mixer or the

like is preferably adopted. Conditions for melt-kneading are not particularly limited, and a method in which melt-kneading is conducted for about 1 to 120 minutes at a temperature within the range of about 0 to 60°C higher than the melting point of the polyamide block copolymer is exemplified.

<<Molded Article>>

As one of the present embodiments, a molded article formed of the above-described polyamide block copolymer or the above-described polyamide block copolymer composition can be provided.

The molded article of the present embodiment can be used as various molded articles for electric and electronic parts, automobile parts, industrial parts, fibers, films, sheets, household goods, and other parts with arbitrary shapes and applications.

<Method for Producing Molded Article>

The method for producing the molded article is not particularly limited, and examples thereof include various conventional molding methods such as injection molding, blow molding, press molding, extrusion molding, calender molding, vacuum molding, air pressure molding, bead molding, and batch foam molding. Examples of the form of the molded article include a pellet, a sheet, a plate, a pipe, a tube, a rod, a granular body, and a foam.

<Applications>

Since the polyamide block copolymer and the polyamide block copolymer composition of the present embodiment have improved thermal stability as compared with the related art and can be excellent in heat resistance and flexibility, the polyamide block copolymer and the polyamide block copolymer composition can be used in a wide range of fields in which the properties are required. For example, the polyamide block copolymer and the polyamide block copolymer composition of the present embodiment can be widely used as materials for various parts such as electric and electronic parts, automobile parts, industrial material parts, industrial parts, daily necessities, household goods, sports parts, leisure parts, and medical parts. In particular, it can be applied to complex-shaped parts by injection molding, hollow molded parts by blow molding, hose - and tube-shaped parts and films and sheets by extrusion molding, lightweight members and heat insulating materials by injection and/or extrusion foam molding, and additives for resin modification. It is also applicable as a foam by injection molding, blow molding, press molding, extrusion molding, calender molding, vacuum molding, air pressure molding, bead molding or batch foam molding.

Among the electronic and electric parts, more specifically, it can be used as a material for a hinge portion of a cellular phone and a game machine, a grip for a camera, a printer tractor belt, an electric wire coating, a tube for a home electric appliance, and the like.

Among the automobile parts, more specifically, it can be used as a material for constant velocity joint boot parts, curl cords, air back doors, hydraulic hoses, shift levers, cable liners, automobile belts, fuel tether caps, door locks, steering switches, seat locks, accelerator pedals, air ducts, airless tires, tire skeletons, tire inner liners, and the like.

Among the industrial material parts and/or industrial parts, more specifically, it can be used as a material for submerged pumps, sealing members, bushes, tubes, spiral tubes, diaphragms, mop joints, noiseless gears, mandrels, films, non-woven fabrics, monofilaments, ball joint sheets, register rods, fire-fighting hoses, conveyor belts, pulleys, wire cables, and the like.

Among the daily necessities and/or household goods, more specifically, it can be used as a material for a hair dryer brush, a manicure case, a hot curler, a fastener pull tab, a bobbin case, a console shutter, a corrugated tube, a corrugated hose, a pillow cushion material, a mattress cushion material, a chair cushion material, and the like.

Among the sports parts, more specifically, it can be used as a material for running shoes, spike shoes, ski boots, and the like.

Among the medical parts, more specifically, it can be used as a material for medical catheters, wearable devices, optical products, parts for eye care, and the like.

<Foam>

One advantageous embodiment of the above-described molded article is a foam. Therefore, the foam will be described.

The method for producing the foam includes, for example, the steps of (1) extrusion, (2) crosslinking, (3) foaming, (4) expansion process, and (5) molding. (1) In the extrusion step, mixing and kneading are performed as necessary. (2) As the crosslinking, at least one of chemical crosslinking and physical crosslinking is performed. (3) In the foaming step, a foaming agent such as an organic foaming agent may be used, or a supersaturated gas, preferably an inert gas, may be

used, or both a foaming agent and a supersaturated gas may be used. (4) As the expansion process, free expansion may be performed, for example, in an oven, or limited expansion may be performed, for example, in a mold. (5) The molding may be performed in a batch manner or in a continuous manner. Examples of the molding method include press molding, vacuum molding, embossing, and overinjection. The method for producing the foam is not limited to the above examples. In order to produce the foam, in place of or in addition to the above steps, any one of injection molding, blow molding, extrusion molding, calender molding, air pressure molding, bead molding, and batch foam molding may be performed, or any one of cutting, punching, carving, and coating (for example, adhesive coating and extrusion coating) may be performed.

Applications of the foam include soccer balls, sport glove pads (pads for goalkeepers and boxing), immersion suits, golf club grips, repulsive layers for table tennis rackets, ski poles, grips of sport bats, snowboard or windsurfing pads, saddles (e.g., bicycle saddles), cushions (e.g., ski lift seat cushions, pillow cushions, mattress cushions, and chair cushions), ski shoe components; non-slip coating tapes; undergarments (e.g., bra cups); mouse pads, soft keyboards, buttons; article trays (e.g., automotive article trays); gaskets; flexographic printing rolls; singlesided adhesive coating tapes, double-sided adhesive coating tapes; orthopedic insoles or inlays, footwear insoles or sockliners, footwear insoles, footwear linings, waterproof, breathable insoles or insoles, footwear shafts or heel inserts, forelimb inserts; transdermal pads, transdermal absorbent pads, wound care plasters; sportswear and clothing linings.

## Examples

Hereinafter, the present invention will be specifically described with reference to Examples and Comparative Examples, but the present invention is not limited thereto.

### <Measurement and Evaluation Method]

Various physical properties were measured or evaluated by the following methods.

### [Molecular Weight]

Each of the polyamides produced in Synthesis Examples, the polyethers used as the polymer block (B), and the polyamide block copolymers obtained in Examples and Comparative Examples was used as a sample, and the number-average molecular weight (Mn) and the weight-average molecular weight (Mw) were determined as the molecular weight in terms of standard polymethyl methacrylate by gel permeation chromatography (GPC).

A solution of 1,1,1,3,3,3-hexafluoroisopropanol (HFIP) in which sodium trifluoroacetate was dissolved at a ratio of 0.85 g to 1 kg of HFIP was used as an eluent. A sample (1.5 mg in terms of resin) was weighed and dissolved in 3 mL of the above eluent, and the eluent was passed through a 0.4 μm membrane filter to prepare a measurement sample. The measurement conditions were as follows.

(Measurement Conditions)

Apparatus: HLC-8320GPC (manufactured by Tosoh Corporation)
Column: two pieces of TSkgel Super HM-H (manufactured by Tosoh Corporation) were coupled in series.
Eluent: 0.085% by mass sodium trifluoroacetate/HFIP solution
Flow rate: 0.5 mL/min (reference column: 0.25 mL/min)
Sample injection amount: 30 μL
Column temperature: 40°C
Standard polymethyl methacrylate: Shodex Standard M-75 (Showa Denko K.K.), Polymethylmethacrylate molecular weight 1010 and molecular weight 535 (Agilent Technologies, Inc.)
Detector: UV (254 nm) detector, UV (210 nm) detector

### [Measurement of Terminal Amino Group Content ([$NH_2$])]

The polyamide produced in Synthesis Example was used as a sample, and 1 g of the sample was dissolved in 35 mL of phenol, and 3 mL of methanol was mixed to obtain a sample solution. Titration was performed using a 0.01N or 0.1N HCl aqueous solution with thymol blue as an indicator, and the terminal amino group content ([$NH_2$], unit: μmol/g) was measured.

[Measurement of Terminal Carboxy Group Content ([COOH])]

The polyamide produced in Synthesis Example was used as a sample, 0.5 g of the sample was dissolved in 40 mL of o-cresol to obtain a sample solution. Using a potentiometric titrator, titration was performed using a 0.01N or 0.1N KOH/EtOH solution under the following measurement conditions, and the terminal carboxy group content ([COOH], unit: μmol/g) was measured.

(Measurement Conditions)

Measuring apparatus: MCU-710M/S (manufactured by Kyoto Electronics Manufacturing Co., Ltd.)
Measuring unit: AT-710
Main control unit: MCU-710

The terminal carboxy group content ([COOH], unit: μmol/g) of adipic acid and terephthalic acid used as the terminal functionalizing agent was determined by calculation from the molecular weight based on the fact that each molecule has two carboxy groups.

[Terminal Blocking Ratio]

For the polyamide block copolymers obtained in Examples, the terminal blocking ratio was calculated from the following Equation (2).

Terminal blocking ratio "%" = {(number of blocked terminal groups)/(total number of terminal groups)} × 100 Equation (2):

The meanings of terms in the above Equation (2) are as follows.

- Number of blocked terminal groups (μmol/g) = total number of terminal groups - (number of active terminal groups)
- Total number of terminal groups (μmol/g) = 2000000/Mn
- Number of active terminal groups (μmol/g) = terminal amino group concentration (μmol/g) + terminal carboxy group concentration (μmol/g)
- Mn is a value calculated from GPC as in the "molecular weight" above.
- The terminal amino group concentration and the terminal carboxy group concentration are values quantified using the polyamide block copolymers obtained in Examples and Comparative Examples as samples by the same titration method as the above-mentioned [Measurement of Terminal Amino Group Content ([$NH_2$])] and [Measurement of Terminal Carboxy Group Content ([COOH])].

[Melting Point and Heat of Fusion]

The polyamides produced in Synthesis Examples and the polyamide block copolymers obtained in Examples and Comparative Examples were used as samples, and the melting points thereof were measured using a differential scanning calorimeter "DSC25" manufactured by TA Instruments.

The melting point was measured in accordance with ISO 11357-3 (second edition, 2011). To be specific, in a nitrogen atmosphere, a sample was heated from 30°C to 340°C at a rate of 10°C/min, held at 340°C for 5 minutes to completely melt the sample, then cooled to 50°C at a rate of 10°C/min, and held at 50°C for 5 minutes. The peak temperature of the melting peak that appeared when the temperature was raised again to 340°C at a rate of 10°C/min was taken as the melting point (°C), and when there were a plurality of melting peaks, the peak temperature of the melting peak on the highest temperature side was taken as the melting point (°C). The area of the melting peak was defined as the heat of fusion (ΔHm), and the heat of fusion was determined by drawing a baseline from the melting start temperature to the melting yield temperature.

[Weight Loss Rate]

As an index of thermal stability of the polyamide block copolymers obtained in Examples and Comparative Examples, the weight loss rate was determined by the following method.

The polyamide block copolymers produced in Examples and Comparative Examples were used as samples, and a thermogravimetric analyzer "TG/DTA7200" manufactured by SII Nanotechnology Inc. was used.

Specifically, the sample was allowed to stand in a dryer at 120°C for 12 hours, then heated from 25°C to 120°C at a rate of 80°C/min under a flow of 100 mL of nitrogen, held at 120°C for 15 minutes, then heated from 120°C to 300°C at a rate of 80°C/min, and held at 300°C for 60 minutes. The ratio of the weight reduced during heating from 120°C to 300°C and holding at 300°C for 60 minutes to the weight after holding at 120°C for 15 minutes was taken as the weight loss rate. It was evaluated that the smaller the weight loss rate, the more excellent the thermal stability.

[Tensile Strength at Break and Tensile Elongation at Break]

Each of the polyamide block copolymers obtained in Examples and Comparative Examples was melt-kneaded for 3 minutes at a cylinder temperature that is 20°C higher than the melting point of the polyamide block copolymer using a desktop type small-sized kneader/injection molding machine ("Xplore MC15") manufactured by Xplore Instruments, and then a small-sized test piece type 1BA (2 mm thick, total length 75 mm, parallel portion width 5 mm) for tensile evaluation was prepared under the conditions of a mold temperature of a T-runner mold of an injection molding machine of 140°C and an injection pressure of 1.0 bar. The obtained small-sized test piece type 1BA of the polyamide block copolymer was left to stand in a dryer at 140°C for 6 hours, and then the tensile strength at break and the tensile elongation at break were measured at 23°C using an Instron Universal Testing Machine ("Model 5566" manufactured by Instron Corporation).

In particular, the chuck-to-chuck distance was 50 mm, the test speed was 0.25 mm/min in a region of a strain of 0 to 0.3%, and then the test speed was 50 mm/min in a region of a strain of 0.3% or more. For the tensile elongation at break, the value of nominal strain according to Method A of JIS K 7161-1:2014 was adopted.

<Each Material>

Each material used in Examples and Comparative Examples is as follows.

<Polymer Block (A)>

PA-1 to PA-5 produced in the following Synthesis Examples were used as elements of the polymer block (A). PA-6 produced in the following Synthesis Example was used as an element of a non-semi-aromatic polyamide-containing polymer block (A') to be compared with the polymer block (A).

[Synthesis Example 1]

Production of semi-aromatic polyamide (PA-1)

In an autoclave having an internal volume of 5 L, 1017.6 g (6.13 mol) of terephthalic acid, 988.2 g (6.24 mol) of a mixture of 1,9-nonanediamine (C9DA in Table 3)/2-methyl-1,8-octanediamine (MC8DA in Table 3) (molar ratio of 50/50), 18.2 g (0.15 mol) of benzoic acid as a terminal blocking agent, 2.0 g (0.1% by mass with respect to the total mass of the raw materials) of sodium hypophosphite monohydrate, and 788 mL of distilled water were placed and subjected to nitrogen substitution. The mixture was stirred at 100°C for 30 minutes, and the temperature inside the autoclave was then raised to 220°C over 3 hours. At this time, the pressure inside the autoclave increased to 2.0 MPa. Heating was continued for 2 hours while maintaining the pressure at 2.0 MPa, and the reaction was allowed to proceed by gradually removing the water vapor. The reaction was further continued for 1 hour to obtain a prepolymer. The obtained prepolymer was dried at 120°C under reduced pressure for 24 hours and pulverized to a particle diameter of 1 mm or less. This prepolymer is abbreviated as "PA-1". The semi-aromatic ratio (unit: %) is shown in Table 1.

[Synthesis Example 2]

Production of semi-aromatic polyamide (PA-2)

In an autoclave having an internal volume of 5 L, 983.0 g (5.92 mol) of terephthalic acid, 983.0 g (6.14 mol) of a mixture of 1,9-nonanediamine/2-methyl-1,8-octanediamine (molar ratio of 50/50), 44.7 g (0.37 mol) of benzoic acid as a terminal blocking agent, 2.0 g (0.1% by mass with respect to the total mass of the raw materials) of sodium hypophosphite monohydrate, and 789 mL of distilled water were placed and subjected to nitrogen substitution. The mixture was stirred at 100°C for 30 minutes, and the temperature inside the autoclave was then raised to 220°C over 3 hours. At this time, the pressure inside the autoclave increased to 2.0 MPa. Heating was continued for 2 hours while maintaining the pressure at 2.0 MPa, and the reaction was allowed to proceed by gradually removing the water vapor. The reaction was further

continued for 1 hour to obtain a prepolymer. The obtained prepolymer was dried at 120°C under reduced pressure for 24 hours and pulverized to a particle diameter of 1 mm or less. This prepolymer is abbreviated as "PA-2". The semi-aromatic ratio is shown in Table 1.

[Synthesis Example 3]

Production of semi-aromatic polyamide (PA-3)

In an autoclave having an internal volume of 5 L, 732.7 g (4.41 mol) of terephthalic acid, 730.0 g (4.53 mol) of a mixture of 1,10-decanediamine (DDA in Table 3)/hexamethylenediamine (HMDA in Table 3) (molar ratio of 80/20), 22.0 g (0.18 mol) of benzoic acid as a terminal blocking agent, 1.5 g (0.1% by mass with respect to the total mass of the raw materials) of sodium hypophosphite monohydrate, and 578 mL of distilled water were placed and subjected to nitrogen substitution. The mixture was stirred at 100°C for 30 minutes, and the temperature inside the autoclave was then raised to 220°C over 3 hours. At this time, the pressure inside the autoclave increased to 2.0 MPa. Heating was continued for 2 hours while maintaining the pressure at 2.0 MPa, and the reaction was allowed to proceed by gradually removing the water vapor. The reaction was further continued for 1 hour to obtain a prepolymer. The obtained prepolymer was dried at 120°C under reduced pressure for 24 hours and pulverized to a particle diameter of 1 mm or less. This prepolymer is abbreviated as "PA-3". The semi-aromatic ratio is shown in Table 1.

[Synthesis Example 4]

Production of semi-aromatic polyamide (PA-4)

In an autoclave having an internal volume of 1 L, 203.7 g (1.27 mol) of terephthalic acid, 197.5 g (1.25 mol) of a mixture of 1,9-nonanediamine/2-methyl-1,8-octanediamine (molar ratio of 50/50), 6.0 g (0.03 mol) of lauric acid as a terminal blocking agent, 0.4 g (0.1% by mass with respect to the total mass of the raw materials) of sodium hypophosphite monohydrate, and 158 mL of distilled water were placed and subjected to nitrogen substitution. The mixture was stirred at 100°C for 30 minutes, and the temperature inside the autoclave was then raised to 220°C over 3 hours. At this time, the pressure inside the autoclave increased to 2.0 MPa. Heating was continued for 2 hours while maintaining the pressure at 2.0 MPa, and the reaction was allowed to proceed by gradually removing the water vapor. The reaction was further continued for 1 hour to obtain a prepolymer. The obtained prepolymer was dried at 120°C under reduced pressure for 24 hours and pulverized to a particle diameter of 1 mm or less. This prepolymer is abbreviated as "PA-4". The semi-aromatic ratio is shown in Table 1.

[Synthesis Example 5]

Production of semi-aromatic polyamide (PA-5)

In an autoclave having an internal volume of 1 L, 193.5 g (1.17 mol) of terephthalic acid, 8.96 g (0.06 mol) of adipic acid, 197.5 g (1.25 mol) of a mixture of 1,9-nonanediamine/2-methyl-1,8-octanediamine (molar ratio of 50/50), 3.7 g (0.03 mol) of benzoic acid as a terminal blocking agent, 0.4 g (0.1% by mass with respect to the total mass of the raw materials) of sodium hypophosphite monohydrate, and 158 mL of distilled water were placed and subjected to nitrogen substitution. The mixture was stirred at 100°C for 30 minutes, and the temperature inside the autoclave was then raised to 220°C over 3 hours. At this time, the pressure inside the autoclave increased to 2.0 MPa. Heating was continued for 2 hours while maintaining the pressure at 2.0 MPa, and the reaction was allowed to proceed by gradually removing the water vapor. The reaction was further continued for 1 hour to obtain a prepolymer. The obtained prepolymer was dried at 120°C under reduced pressure for 24 hours and pulverized to a particle diameter of 1 mm or less. This prepolymer is abbreviated as "PA-5". The semi-aromatic ratio is shown in Table 1.

[Synthesis Example 6]

Production of aliphatic polyamide (PA-6) as a non-semi-aromatic polyamide

In an autoclave having an internal volume of 1 L, 254.4 g (1.74 mol) of adipic acid, 280.5 g (1.77 mol) of a mixture of 1,9-nonanediamine/2-methyl-1,8-octanediamine (molar ratio of 50/50), 5.2 g (0.04 mol) of benzoic acid as a terminal blocking agent, 0.5 g (0.1% by mass with respect to the total mass of the raw materials) of sodium hypophosphite monohydrate, and 210 mL of distilled water were placed and subjected to nitrogen substitution. The mixture was stirred at 100°C for 30 minutes, and the temperature inside the autoclave was then raised to 220°C over 3 hours. At this time, the

pressure inside the autoclave increased to 2.0 MPa. Heating was continued for 2 hours while maintaining the pressure at 2.0 MPa, and the reaction was allowed to proceed by gradually removing the water vapor. The reaction was further continued for 1 hour to obtain a prepolymer. The obtained prepolymer was dried at 120°C under reduced pressure for 24 hours and pulverized to a particle diameter of 1 mm or less. This prepolymer is abbreviated as "PA-6". The semi-aromatic ratio is shown in Table 1.

[Terminal Functionalizing Agent]

As an element of the polymer block (A) and the polymer block (A'), the following dicarboxylic acid monomer as a terminal functionalizing agent was used. It was confirmed that the terminal amino group of the semi-aromatic polyamide was quantitatively converted into a carboxy group by the terminal functionalizing agent (dicarboxylic acid monomer).

- Terephthalic acid (abbreviated as "TA" in Table 3): manufactured by Tokyo Chemical Industry Co., Ltd.
- Adipic acid (abbreviated as "AA" in Table 3): manufactured by Tokyo Chemical Industry Co., Ltd.

PA-1 to PA-6 were evaluated for various physical properties as described above. The results are shown in Table 1 together with the physical properties of the terminal functionalizing agent.
The notation in Table 1 is as follows.
In the columns of PA-1, PA-2, and PA-4 to PA-6, "n/i" indicates a molar ratio of 1,9-nonanediamine/2-methyl-1,8-octanediamine. In the column of PA-3, "n/i" indicates a molar ratio of 1,10-decanediamine/hexamethylenediamine.
"[$NH_2$]" indicates the terminal amino group content.
"[COOH]" indicates the terminal carboxy group content.

[Table 1]

Table 1

| | n/i | Semi-aromatic ratio | Mn | Mw | [$NH_2$] (μmol/g) | [COOH] (μmol/g) | Melting point (°C) |
|---|---|---|---|---|---|---|---|
| PA-1 | 50/50 | 100% | 1,500 | 3,500 | 520 | 580 | 264 |
| PA-2 | 50/50 | 100% | 1,300 | 3,000 | 520 | 580 | 262 |
| PA-3 | 80/20 | 100% | 500 | 1,500 | 960 | 1,100 | 303 |
| PA-4 | 50/50 | 100% | 1,900 | 2,800 | 840 | 1,010 | 262 |
| PA-5 | 50/50 | 95% | 2,600 | 4,000 | 580 | 720 | 259 |
| PA-6 | 50/50 | 0% | 3,400 | 6,700 | 510 | 670 | 203 |
| TA | - | - | 166 | - | - | 12,040 | - |
| AA | - | - | 146 | - | - | 13,690 | - |

<Polymer Block (B)>

As the polymer block (B), the following oxygen atom-containing polymer was used.

[Polyether]

- PE-1: Polyether diamine (diamine of copolymer of polyethylene glycol and polypropylene glycol), manufactured by Sigma-Aldrich Co. LLC, Jeffamine (registered trademark) ED-900
- PE-2: Polyether diamine (diamine of copolymer of polyethylene glycol and polypropylene glycol), manufactured by Sigma-Aldrich Co. LLC, Jeffamine (registered trademark) ED-600
- PE-3: Polyetherdiamine (polyoxytetramethylenediamine), manufactured by Koei Chemical Co., Ltd., PTMGPA-1000

Physical properties of the polymer block (B) are shown in Table 2.
The notation in Table 2 is as follows.

"[$NH_2$]" indicates the terminal amino group content.

"Tg" indicates a glass transition temperature measured by the following [Measuring method of glass transition temperature].

**"< -70"** indicates that the glass transition temperature was lower than -70°C because the inflection point in the range of -70°C or higher, which is the measurement limit of the apparatus, could not be confirmed. As reference values, the glass transition temperatures (based on literature values) of the corresponding polyether diols are also listed in Table 2. "~ -70" indicates a temperature range of -80°C to -60°C, and "~ -85" indicates a temperature range of -95°C to -75°C.

[Measuring method of glass transition temperature]

Each of the polymer blocks (B) was used as a sample, and the glass transition temperature thereof was measured using a differential scanning calorimeter "DSC25" manufactured by TA Instruments.

The glass transition temperature was defined as the temperature of the inflection point appearing when the sample was cooled from 25°C to -90°C at a rate of 2°C/min in a nitrogen atmosphere, held at -90°C for 10 minutes to completely cool the sample, and then raised the temperature to 25°C at a rate of 2°C/min.

[Table 2]

Table 2

| | Mn | (μmol/g) | Tg (°C) | Tg of polyetherdiol [based on literature values] (°C) |
|---|---|---|---|---|
| PE-1 | 900 | 2,222 | -66 | ~ -70 |
| PE-2 | 500 | 4,000 | -73 | ~ -70 |
| PE-3 | 1,000 | 2,000 | < -70 | ~ -85 |

<Example 1>

The raw materials used for the reaction were used at the mass ratios shown in Table 3, and the reaction was carried out.

"PA-1" of Synthesis Example 1 as the polymer block (A) and terephthalic acid as the terminal functionalizing agent were added to a flask having an internal volume of 200 mL equipped with an instrument capable of distilling off the generated volatile components and a vacuum pump, the temperature was raised to a resin temperature of 280°C while stirring under a nitrogen stream of 200 mL/min, and this temperature was maintained for 30 minutes. Subsequently, "PE-1" was added as the polymer block (B), and the mixture was stirred at a resin temperature of 280°C for another 1 hour to remove the distillate. Subsequently, the pressure of the reaction system was reduced to 10 Pa, and the mixture was stirred at a resin temperature of 280°C for another 1 hour, and then the polyamide block copolymer was taken out. To exemplify the mass ratio (A)/(B) shown in Table 3, in Example 1, with respect to 69 parts by mass (for example, 68.7 g) of the polyamide PA-1 functionalized with the terminal functionalizing agent, 31 parts by mass (for example, 31.3 g) of the polyether PE-1 were used.

<Examples 2 to 4, 6, and 7>

A polyamide block copolymer was obtained in the same manner as in Example 1, except that the materials and the mass ratios were changed as shown in Table 3.

<Example 5>

A polyamide block copolymer was obtained in the same manner as in Example 1, except that the materials and the mass ratios were changed as shown in Table 3, and the resin temperature during polymerization was changed to 300°C.

<Comparative Example 1>

The raw materials used for the reaction were used at the mass ratios shown in Table 3, and the reaction was carried out.

In a glass beaker having an internal volume of 5 L, 588.6 g (3.54 mol) of terephthalic acid, 488.7 g (0.54 mol) of "PE-1", 285 mL of distilled water, and 1.6 g (0.1% by mass with respect to the total mass of the raw materials) of sodium hypophosphite monohydrate were put, and stirred at room temperature so as to be uniform. Subsequently, 474.8 g (3.00 mol) of a mixture of 1,9-nonanediamine/2-methyl-1,8-octanediamine (molar ratio of 50/50) and 204 mL of distilled water were added to the mixture, and stirring was continued. Thereafter, a uniform salt was obtained from the reaction solution. The obtained salt was placed in an autoclave having an internal volume of 5 L, and subjected to nitrogen substitution. The mixture was stirred at 100°C for 30 minutes, and the temperature inside the autoclave was then raised to 245°C over 3 hours. At this time, the pressure inside the autoclave increased to 3.0 MPa. Heating was continued for 2 hours, followed by cooling, and the reaction product was taken out of the autoclave, dried at 120°C for 24 hours under reduced pressure, and pulverized to a particle diameter of 1 mm or less. Forty g of the pulverized product was transferred to a 200 mL flask, and the temperature was raised to a resin temperature of 300°C while stirring under a nitrogen stream of 200 mL/min, the pressure of the reaction system was reduced to 10 Pa, and the product was stirred at a resin temperature of 300°C for 3 hours, and then the polyamide block copolymer was taken out.

<Comparative Example 2>

A polyamide block copolymer was obtained in the same manner as in Comparative Example 1, except that the materials and the mass ratios were changed as shown in Table 3.

<Comparative Example 3>

A polyamide block copolymer was obtained in the same manner as in Example 1, except that the materials and the mass ratios were changed as shown in Table 3. While the polymer block (A) was used in Example 1, a non-semi-aromatic polyamide-containing polymer block (A') was used in place of the polymer block (A) in Comparative Example 3.

Using the polyamide block copolymers obtained in the above Examples and Comparative Examples, various physical properties were evaluated. The physical property evaluation results are shown in Table 3.

[Table 3]

Table 3

| | | Examples | | | | | | | Comparative Example | | |
|---|---|---|---|---|---|---|---|---|---|---|---|
| | | 1 | 2 | 3 | 4 | 5 | 6 | 7 | 1 | 2 | 3 |
| Polymer block(A) [parts by mass] | PA-1 (C9DA/MC8DA = 50/50) | 63.2 | 73.5 | 61.5 | - | - | - | - | - | - | - |
| | PA-2 (C9DA/MC8DA = 50/50) | - | - | - | 61.5 | - | - | - | - | - | - |
| | PA-3 (DDA/HMDA = 80/20) | - | - | - | - | 47.9 | - | - | - | - | - |
| | PA-4 (C9DA/MC8DA = 50/50) | - | - | - | - | - | 47.8 | - | - | - | - |
| | PA-5 (C9DA/MC8DA = 50/50) | - | - | - | - | - | - | 58.9 | - | - | - |
| | Terminal functionalizing agent: TA | 5.5 | 6.3 | - | - | 7.6 | 8.2 | 6.9 | - | - | - |
| | Terminal functionalizing agent: AA | - | - | 4.7 | 4.7 | - | - | - | - | - | - |
| Monomer corresponding to hard segment [parts by mass] | Diamine (C9DA/MC8-DA = 50/50) | - | - | - | - | - | - | - | 30.6 | 18.5 | - |
| | Diamine (C9DA/MC8-DA =70/30) | - | - | - | - | - | - | - | - | - | - |
| | Dicarboxylic acid: TA | - | - | - | - | - | - | - | 37.9 | 29.1 | - |
| Non-semi-aromatic PA-containing polymer block (A') [parts by mass] | PA-6 (C9DA/MC8-DA=50/50) | - | - | - | - | - | - | - | - | - | 66.5 |
| | Terminal functionalizing agent: AA | - | - | - | - | - | - | - | - | - | 4.7 |
| Polymer block (B) [parts by mass] | PE-1 | 31.3 | - | - | 33.8 | 44.4 | 44.0 | 34.2 | 31.5 | 52.5 | 28.8 |
| | PE-2 | - | 20.2 | - | - | - | - | - | - | - | - |
| | PE-3 | - | - | 33.8 | - | - | - | - | - | - | - |
| | Mass ratio (A)/(B) | 69/31 | 80/20 | 66/34 | 66/34 | 56/44 | 56/44 | 66/34 | 69/31 | 48/52 | 71/29 |

(continued)

| | | Examples | | | | | | | Comparative Example | | |
|---|---|---|---|---|---|---|---|---|---|---|---|
| | | 1 | 2 | 3 | 4 | 5 | 6 | 7 | 1 | 2 | 3 |
| Polyamide block copolymer | Terminal blocking agent (molecular terminal) | Benzoic acid (phenyl group) | Benzoic acid (phenyl group) | Benzoic acid (phenyl group) | Benzoic acid (phenyl group) | Benzoic acid (phenyl group) | Lauric acid (alkyl group) | Benzoic acid (phenyl group) | - | - | Benzoic acid (phenyl group) |
| | Number-average molecular weight Mn | 15,000 | 18,000 | 11,000 | 5,100 | 6,000 | 9,700 | 17,000 | 6,300 | 12,400 | 12,000 |
| | Weight-average molecular weight Mw | 141,000 | 97,000 | 151,000 | 62,000 | 70,000 | 108,000 | 91,000 | 60,000 | 77,000 | 86,000 |
| | Terminal amino group concentration [μmol/g] | 15 | 10 | 15 | 30 | 30 | 20 | 21 | - | - | 27 |
| | Terminal carboxy group concentration [μmol/g] | 60 | 50 | 100 | 200 | 220 | 70 | 60 | - | - | 60 |
| | Terminal blocking ratio [%] | 44 | 46 | 37 | 41 | 25 | 56 | 31 | - | - | 48 |
| | Melting point (°C) | 248 | 250 | 241 | 244 | 263 | 235 | 243 | 244 | 216 | 195 |
| Evaluation | Heat of fusion $_{\Delta}$Hm[J/g] | -23 | -27 | -27 | -26 | -24 | -19 | -21 | -22 | -11 | -23 |
| | Weight loss rate [%} | 0.21 | 0.37 | 0.16 | 0.76 | 0.82 | 0.58 | 0.55 | 1.00 | 1.25 | 0.85 |
| | Tensile strength at break [MPa] | 50 | - | 41 | 32 | - | 28 | 39 | 27 | 10 | 34 |
| | Tensile elongation at break [%] | 328 | - | 411 | 407 | - | 502 | 398 | 191 | 170 | 525 |

From the results shown in Table 3, it can be seen that the polyamide block copolymers obtained in Examples 1 to 7 are excellent in thermal stability. On the other hand, the polyamide block copolymers obtained in Comparative Examples 1 and 2 had molecular terminals that were not blocked with a terminal blocking agent, resulting in poorer thermal stability than in the Examples. From the results of Table 3, it can be seen that the polyamide block copolymers obtained in Examples 1 to 7 are superior in heat resistance to the polyamide block copolymer obtained in Comparative Example 3. It was also confirmed that the polyamide block copolymers obtained in Examples 1 to 7 can be used under higher temperature conditions than the polyamide block copolymer obtained in Comparative Example 3.

From these results, it is considered that it is important to block the molecular terminal of the polyamide block copolymer with a specific terminal blocking ratio in order to improve the thermal stability.

Industrial Applicability

The polyamide block copolymer of the present embodiment has improved thermal stability as compared with the conventional polyamide block copolymer, and is excellent in heat resistance and flexibility. Therefore, the polyamide block copolymer and the polyamide block copolymer composition of the present embodiment can be widely used as materials for various parts such as electric and electronic parts, automobile parts, industrial material parts, industrial parts, daily necessities, clothing, parts for household goods, sports parts, leisure parts, and medical parts. In particular, it can be applied to complex-shaped parts by injection molding, hollow molded parts by blow molding, hose- and tube-shaped parts and films and sheets by extrusion molding, lightweight members and heat insulating materials by injection and/or extrusion foam molding, and additives for resin modification. It is also applicable as a foam by injection molding, blow molding, press molding, extrusion molding, calender molding, vacuum molding, air pressure molding, bead molding or batch foam molding.

## Claims

**1.** A polyamide block copolymer which comprises a polymer block (A) comprising a constitutional unit derived from a semi-aromatic polyamide in an amount of 50 mol% or more and a polymer block (B) having a glass transition temperature of 20°C or lower, and has a terminal blocking ratio of 10% or more.

**2.** The polyamide block copolymer according to claim 1, wherein the polymer block (B) has a number-average molecular weight of 100 or more.

**3.** The polyamide block copolymer according to claim 1, wherein the polymer block (B) comprises an oxygen atom in a main chain.

**4.** The polyamide block copolymer according to claim 3, wherein the polymer block (B) comprises a constitutional unit derived from polyetherpolyol or an amine derivative thereof or a carboxy derivative thereof in an amount of 50 mol% or more.

**5.** The polyamide block copolymer according to claim 1, wherein the polyamide block copolymer has a tensile elongation at break of 30% or more as measured in accordance with JIS K 7161-1:2014.

**6.** The polyamide block copolymer according to claim 1, wherein the semi-aromatic polyamide comprises a constitutional unit derived from an aliphatic diamine having 4 or more carbon atoms and a constitutional unit derived from an aromatic dicarboxylic acid.

**7.** The polyamide block copolymer according to claim 1, wherein a molecular terminal is blocked with at least one selected from the group consisting of an aryl group, an aromatic alkyl group, an alkyl group having 1 to 3 carbon atoms, an alkyl group having 9 or more carbon atoms, an alicyclic alkyl group having 4 or more carbon atoms, and a hydrogen atom.

**8.** The polyamide block copolymer according to claim 7, wherein the aryl group is a phenyl group or a naphthyl group.

**9.** The polyamide block copolymer according to claim 7, wherein the aromatic alkyl group is a benzyl group.

**10.** The polyamide block copolymer according to claim 7, wherein the alkyl group having 1 to 3 carbon atoms is a methyl group or an ethyl group.

**11.** The polyamide block copolymer according to claim 7, wherein the alkyl group having 9 or more carbon atoms is a lauryl group or a stearyl group.

**12.** The polyamide block copolymer according to claim 7, wherein the alicyclic alkyl group is a cyclohexyl group.

**13.** A polyamide block copolymer composition comprising the polyamide block copolymer according to any one of claims 1 to 12.

**14.** A molded article formed of the polyamide block copolymer according to any one of claims 1 to 12.

**15.** A molded article formed of the polyamide block copolymer composition according to claim 13.

## INTERNATIONAL SEARCH REPORT

International application No.
**PCT/JP2024/016236**

**A. CLASSIFICATION OF SUBJECT MATTER**

***C08G 81/00***(2006.01)i; ***C08L 77/00***(2006.01)i
FI: C08G81/00; C08L77/00

According to International Patent Classification (IPC) or to both national classification and IPC

**B. FIELDS SEARCHED**

Minimum documentation searched (classification system followed by classification symbols)

C08G81/00; C08L77/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2000-154248 A (KURARAY CO., LTD.) 06 June 2000 (2000-06-06) claims, paragraphs [0020], [0022]-[0024], examples | 1-15 |
| Y | JP 7-228690 A (KURARAY CO., LTD.) 29 August 1995 (1995-08-29) claims, examples | 1-15 |

☐ Further documents are listed in the continuation of Box C.

☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/016236**

| Patent document cited in search report | Publication date (day/month/year) | Patent family member(s) | Publication date (day/month/year) |
|---|---|---|---|
| JP 2000-154248 A | 06 June 2000 | (Family: none) | |
| JP 7-228690 A | 29 August 1995 | US 5670608 A<br>claims, examples<br>EP 659799 A2<br>KR 10-1995-0018161 A<br>CN 1106842 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000154248 A
- JP 7228690 A
- JP 62164728 A
- JP 3237131 A